# EUROPEAN PATENT APPLICATION

(11) **EP 1 967 981 A1**
(43) Date of publication of application: **10.09.2008**
(21) Application number: 06810601.2
(22) Date of filing: 27.09.2006
(51) Int. Cl.: G06F 21/22, G06F 12/14, G06F 21/24

(54) **PROGRAM EXECUTION CONTROL METHOD, DEVICE, AND EXECUTION CONTROL PROGRAM**

(30) Priority: 27.12.2005 JP 2005375137
(71) Applicant: NEC Corporation, Minato-ku Tokyo 108-8001 (JP)
(72) Inventor: IGA, Norihisa c/o NEC CORPORATION, Tokyo 1088001 (JP); SAIDA, Yoshinori c/o NEC CORPORATION, Tokyo 1088001 (JP)
(74) Representative: Glawe, Delfs, Moll
(86) International application number: PCT/JP2006/319110
(87) International publication number: WO 2007/074565

(57) **Abstract**

Provided are a program execution control method, its device, and an execution control program safely executing an application program containing an untrusted code while reducing overhead. Execution environment creating means (190) creates an execution environment in which access to the outside of the execution environment is limited and arranges at least part of a device driver (112), a library (114), and user data (113) provided in the computer in such a way that the part can be referenced from a program running in the execution environment. Execution control means (160) executes the application program introduced and obtained from an application distribution server (200).

## Description

### TECHNICAL FIELD

The present invention relates to execution control of an application program to be executed on a computer and more particularly to the execution control of the application program to protect system resources from an application program containing an untrusted code to achieve the safe execution of the application program.

### BACKGROUND TECHNOLOGY

When an application program (hereafter, simply an "application") is introduced or obtained, by using a wired or wireless network or an outside memory card, from the outside of a computer terminal, there is a fear that various pieces of data in a computer terminal are accessed spuriously or that safe operations of a terminal system are interfered with due to malicious operations by applications, bugs in applications, or a like. Therefore, technology of safely executing an application containing an untrusted code on a computer terminal is important.

One example of a conventional technology of this type is disclosed in Japanese Patent Laid-open No. 2001-514411 (Patent Reference 1). In this conventional technology, an application introduced or obtained from the outside is loaded in a memory called a "sandbox" and, access to the memory is checked by a check code added to a code of the application. The access to the memory, if being made within the sandbox, is allowed and, if being made outside the sandbox, whether or not the access is allowable is judged and, if allowable, the access is allowed and is otherwise blocked. Moreover, an API (Application Programming Interface) call from the application is converted by a conversion code module called a "thunk" module which enables access to a host operating system while preventing the violation of security of a computer system. If the API call is made during the execution of the application, control is passed to the conversion code module and whether or not the execution of the API code by a host operating system is allowable is judged. If the execution of the API call is allowable, the API call is executed and, if the execution of the API call is not allowable, the API call is not executed. There are some cases in which some API calls, after being amended in a specified manner, are executed.

### DISCLOSURE OF THE INVENTION

### Problems to be solved by the invention

According to the conventional technology disclosed in the Patent Reference 1, the application introduced or obtained from the outside is loaded in a memory where access to the outside of the memory is limited or the API call in the application is converted by the conversion code module and, when the call is made, whether or not the application can be executed is checked. That is, the application is executed in the isolated execution environment. By configuring as above, while system resources such as user data, a library, or device driver existing outside of the execution environment are protected, an untrusted application can be executed with safety.

However, in the above technology disclosed in the Patent Application, the application introduced or obtained from the outside is allowed to use a library, device driver, or a like only via the API. Every time the API call is made, whether or not the application can be executed is judged by the conversion code module and, therefore, due to overhead incurring at this time of point, execution speed of the application decreases.

Thus, according to the present invention, it is made possible to provide a program execution control method, program execution control device, and program execution control program which are capable of resolving the conventional technological problems to execute a program containing an untrusted code and to reduce the overhead.

### Means for solving problems

The first program execution control method of the present invention is a method of controlling execution of a program on a computer including a step of arranging at least part of each of a device driver, library, and user data provided in the computer in such a way that the part can be referred to from a program running in an execution environment in which access to the outside of the execution environment is limited and of executing the program in the execution environment.

The second program execution control method of the present invention is a method of controlling execution of a program on a computer including a step of arranging each of a device driver, library, and user data in a range being determined based on a domain of the program out of the device driver, library, and user data provided in the computer in such a way that each of the device driver, library, and user data can be referred to from a program running in an execution environment in which access to an outside of the execution environment is limited to execute the program in the execution environment.

The third program execution control method of the present invention is **characterized in that** a domain of the program is determined based on domain information associated with the program.

The fourth program execution control method of the present invention is **characterized in that** a domain of the program is determined based on a result from verification of a digital certificate or digital signature associated with the program.

The fifth program execution control method of the present invention is **characterized in that,** when a range of each of the device driver, library, and user data to be arranged in the execution environment is determined, a table in which the range is set for every domain type is referred to.

The sixth program execution control method of the present invention is **characterized in that** domain information provided in a package containing the program is obtained to use the information as domain information associated with the program.

The seventh program execution control method of the present invention is **characterized in that** the obtained domain information is provided in the program.

The eighth program execution control method of the present invention is **characterized in that** the domain information provided in the program is obtained to use the information as domain information associated with the program.

The ninth program execution control method of the present invention is **characterized in that** at least one of the domain information provided in the program and domain information provided in a package containing the program is obtained to use the information as domain information associated with the program.

The tenth program execution control method of the present invention is **characterized in that** a digital certificate or digital signature attached to the package having the domain information or a program having the domain information is verified.

The eleventh program execution control method of the present invention is **characterized in that,** in any one of the seventh, eighth and ninth of the program execution control methods, a digital signature is provided to a program having the domain information and the provided digital signature is verified for every program execution.

The twelfth program execution control method of the present invention is **characterized in that,** in the first and second program execution control method, an execution environment of the program is created before activation of the program.

The thirteenth program execution control method of the present invention is **characterized in that,** in the first and second program execution method, the execution of the program is suspended immediately after activation of the program and an execution environment of the program is created and the execution of the program is resumed in the created execution environment.

The fourteenth program execution control method of the present invention is **characterized in that,** in the first or second program execution method, accessibility to functions in a computer from a program running in the execution environment is controlled according to domain information associated with the program.

The fifteenth program execution control method of the present invention is **characterized in that,** in the first and second program execution control method, a size of data or a file in which a program running in the execution environment is able to be produced is controlled according to domain information associated with the program.

The sixteenth program execution control method of the present invention is **characterized in that,** in the first or second program execution control method, an amount of use of resources in a computer by the program running in the execution environment is limited according to domain information associated with the program.

The first program execution control device is a device to control the execution of a program on a computer including an execution environment creating unit to create the execution environment and to arrange at least part of each of the device driver, library, and user data provided in the computer so that the part can be referred to from a program running in an execution environment in which access to the outside of the execution environment is limited and an execution controlling unit to execute said program in the execution environment.

The second program execution control device of the present invention is a device to control execution of a program on a computer including an execution environment creating unit to create an execution environment and to arrange a device driver, library, and user data in a range being determined based on a domain of the program out of the device driver, library, and user data provided in the computer in such a way that the device driver, library, and user data can be referred to from a program running in an execution environment in which access to an outside of the execution environment is limited and an execution control unit to execute the program in the execution environment.

The third program execution control device of the present invention is **characterized in that** the execution environment creating unit determines a domain of the program based on domain information associated with the program.

The fourth program execution control device of the present invention is **characterized in that,** in the second execution control device, the execution environment creating unit determines a domain of the program based on a result from verification of a digital certificate or digital signature associated with the program.

The fifth program execution control device of the present invention is **characterized in that,** in the second program execution control device, the execution environment creating unit, when determining a range of each of the device driver, library, and user data to be arranged in the execution environment, refers to a table in which the range is set for every domain type.

The sixth program execution control device of the present invention is characterized, in the third program execution control device, by further including a domain information obtaining unit to obtain domain information provided in a package containing the program to use the information as domain information associated with the program.

The seventh program execution control device of the present invention is **characterized in that,** in the sixth program execution control device, the domain information obtaining unit provides the obtained domain information to the program.

The eighth program execution control device of the present invention is characterized, in the third program execution control device, by including a domain information obtaining unit to obtain domain information provided in the program to use the information as domain information associated with the program.

The ninth program execution control device of the present invention is characterized, in the third program execution control device, by including a domain information obtaining unit to obtain at least one of domain information provided in the program and domain information provided in a package containing the program to use the information as domain information associated with the program.

The tenth program execution control device of the present invention is characterized, in any one of the sixth, eighth, ninth program execution control device , by including a verifying unit to verify a digital certificate or digital signature attached to the package having the domain information or a program having the domain information.

The eleventh program execution control device of the present invention is characterized, in any one of the seventh, eighth, and ninth program execution control device, by including a verifying unit to provide a digital signature in the program having the domain information and to verify the provided digital signature for every program execution.

The twelfth program execution control device of the present invention is **characterized in that,** in the first and second program execution control device, the execution environment creating unit creates an execution environment of the program before activation of the program.

The thirteenth program execution control device of the present invention is **characterized in that,** in the first or second program execution control device, the execution controlling unit suspends the execution of the program immediately after activation of the program and creates an execution environment of the program and resumes the execution of the program in the created execution environment.

The fourteenth program execution control device of the present invention is **characterized in that,** in the first or second program execution control device, accessibility to functions in a computer from a program running in the execution environment is controlled according to domain information associated with the program.

The fifteenth program execution control device of the present invention is **characterized in that,** in the first or second program execution control device, the execution environment creating unit creates an execution environment where a size of data or a file in which a program running in the execution environment is able to be produced is controlled according to domain information associated with the program.

The sixteenth program execution control device of the present invention is characterized, in the first and second program execution control device, by including a resource control unit to limit an amount of use of resources in a computer by the program running in the execution environment according to domain information associated with the program.

### EFFECTS OF THE INVENTION

According to the present invention, a program introduced or obtained from the outside is executed in an execution environment in which access to the outside of the execution environment is limited and, therefore, spurious access to user data or a like existing outside of the execution environment is prevented, which enables a program containing an untrusted code to be executed with safety. Moreover, the device driver, library, and user data which the program is allowed to use are arranged so as to be referred to by a program running in the execution environment and, therefore, unlike the conventional technology in which access can be made to the device driver, library, or a like only via an API call, overhead incurring at a time of executing the program can be reduced.

The more the operational range of each of the device driver, library, and user data that can be referred to by a program running in the created execution environment is expanded, the more overhead incurring at a time of the execution of a program is reduced. On the contrary, the risk of damage to a system increases. In the present invention, this problem is resolved by determining the operational range according to a domain representing an origin of the program. That is, a wider operational range is assigned to a program having a good origin and high safety and no range or narrow range is assigned to a program having neither good origin nor high safety.

The domain representing an origin of a program is determined based on, for example, the domain information associated with the program. In this case, if domain information provided in the program itself introduced from the outside is available, the domain information is used and if no domain information is provided in the program itself, and if the domain information is provided in its packet, the domain information provided in the packet is used. Moreover, if the domain information is tampered, the safety is jeopardized and if a digital certificate or digital signature is attached, the certificate or signature is verified and, after confirming that there is no problem with the certificate or signature, the domain information is used. This verification is performed when a program is installed. Moreover, when domain information, and digital certificate or digital signature are provided in the program itself or even when not provided therein, the system automatically provides them and the domain information, and digital certificate or digital signature are verified for every activation of the program and, therefore, the safety is increased more.

The domain representing an origin of a program can be determined not only by the domain information provided in the way as described above but also by a result from the verification of the digital certificate or digital signature associated with the program.

According to the present invention, it is possible to safely execute a program containing an untrusted code on a computer with overhead being reduced. The reason for this is that an execution environment in which access to outside of the execution environment is limited is created and the device driver, library, and user data existing the outside of the execution environment provided in a computer are arranged so that part of each of the device driver, library, and user data is allowed to be referred to from a program running in the execution environment and a program introduced and obtained from the outside is executed in the execution environment.

### BRIEF DESCRIPTION OF DRAWINGS

Figure 1 is a block diagram showing configurations according to the first embodiment of the present invention.
Figure 2 is a flow chart showing installing operations according to the first embodiment of the present invention.
Figure 3 is a flow chart showing an execution environment creating operation according to the first and second embodiments of the present invention.
Figure 4 is a flow chart showing an access controlling operation according to the first and second embodiments of the present invention.
Figure 5 is a block diagram showing configurations of the execution environment according to the first and second embodiment of the present invention.
Figure 6 is a block diagram showing configurations according to the second embodiment of the present invention.
Figure 7 is a diagram showing a file configuration according to the second embodiment of the present invention.
Figure 8 is a flow chart showing operations at a time of starting an application according to the second embodiment of the present invention.
Figure 9 is a diagram of the configuration of a table representing execution environment creating contents for every domain to be used in the first embodiment of the present invention.
Figure 10 is a block diagram showing configurations according to the third embodiment of the present invention.
Figure 11 is a diagram of the configuration of a table representing execution environment creating contents for every domain to be used in the first and second embodiments of the present invention.
Figure 12 is a diagram of the configuration of a table representing execution environment creating contents for every domain to be used in the third embodiment of the present invention.
Figure 13 is a sequence diagram showing an installing operation according to the first embodiment of the present invention.
Figure 14 is a sequence diagram showing an execution environment creating operation according to the first embodiment of the present invention.
Figure 15 is a sequence diagram showing an execution environment creating operation according to the second embodiment of the present invention.

### BEST MODE OF CARRYING OUT THE INVENTION

Hereinafter, some preferred embodiments of the present invention are described by referring to attached drawings.

### First Embodiment

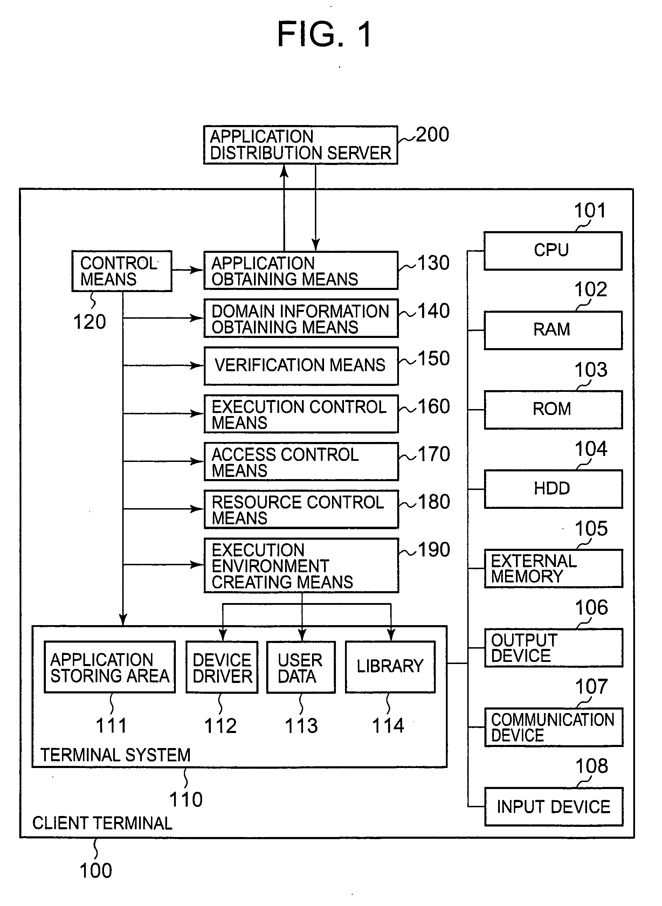

As shown in Fig. 1, the first embodiment of the present invention includes a client terminal 100 and an application distribution server 200 connected, via a wired or wireless network, to the client terminal 100.

The client terminal 100 includes a CPU (Central Processing Unit) 101, a RAM (Random Access Memory) 101, a ROM (Read Only Memory) 103, a HDD (Hard Disk Drive) 104, an external memory 105, an output device 106, a communication device 107, an input device 108, a terminal system 110, a control means 120, an application obtaining means 130, a domain information obtaining means 140, a verification means 150, an execution control means 160, an access control means 170, a resource control means 180, and an execution environment creating means 190. Each of the means 120 to 190 is located in user space of the client terminal 100.

The external system 110 includes an application storing area 111, a device driver 112, user data 113, and a library (library program) 114.

Each of these means and devices approximately operates as described below.

The CPU 101 is a central processing unit which controls each of the means and execution of programs and also performs computation processes.

The RAM 102 is a random access memory which is a readable and writable storage device. The RAM 102 serves as a temporary storage device to be used to read and write data when each of the means operates and/or each program is executed therein. In some cases, the RAM 102 temporarily stores an execution code itself.

The ROM 103 is a read only memory which is configured to read only. The ROM 103 stores information about each of the means, execution codes of programs, data, or a like. Even when the client terminal 1 is turned off, the stored execution codes and data are not erased.

The HDD 104 is a hard disk drive which is a readable and writable storage device. Its reading and writing processing speed is lower than that of the RAM 102, however, its capacity is large and, even when the client terminal 1 is turned off, the stored execution codes and data are not erased.

The external memory 105 is a readable and writable storage memory which is detachable to the client terminal 1. Execution codes or data on an application, library 114, user data 113, device driver 112, or a like are saved in the external memory 105. By attaching the external memory 105 to the client terminal 1, execution codes or data can be added to the client terminal 1.

The output device 106 displays results from processing performed by the client terminal 1 on a display device and outputs voices.

The communication device 107 captures execution codes or data on an application, library 114, user data 113, device driver 112, or a like into the client terminal 1 by carrying out communication with the outside.

The input device 108 captures information into the client terminal 100 by manipulating keys (buttons) or by using voices to make a request for performing new processing.

The control means 120 controls each means mounted in the client terminal 100 to perform processes of obtaining an application, creating an environment for executing the application and of exercising control on the execution of an application.

The application obtaining means 130 obtains a package acquiring an application to which domain information and digital signature or digital certificate are attached from the application distribution server 200 or the external memory 105 and stores the obtained package into the application storing area 111 into the client terminal 100.

The domain information obtaining means 140 obtains the domain information attached to the package acquired by the application obtaining means 130.

The verification means 150 performs verifying processing on the digital signature or digital certificate attached to the package obtained by the application obtaining means 130.

The execution control means 160 executes an application and exerts various controls in an execution environment created by the execution environment creating means 190.

The access control means 170 limits access, based on domain information of an application, when the application accesses the terminal system 110.

The resource control means 180 limits an amount of use of resources such as RAM 102, HDD 104, CPU 101 to be used by the application based on domain information of the application.

The execution environment creating means 190 creates an isolated execution environment in which an application can be executed on the client terminal 100. At this time point, according to the domain information attached to the application, part of each of the device driver 112, user data 113, and library 114 in the terminal system 110 can be referred to directly from the inside of the execution environment of the application. Moreover, the creation of the execution environment by the execution environment creating means 190 is a concept containing not only an actual execution environment but also the selection of the execution environment having been already created. This can be applied to other embodiments of the present invention.

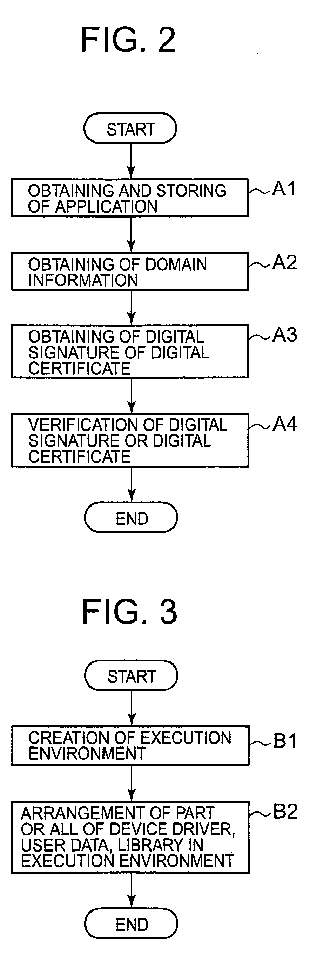

Next, operations of entire configurations of the first embodiment are described by referring to the diagrams of configurations in Fig. 1, flow charts in Figs. 2, 3 and 4, and sequence diagram.

First, operations of obtaining an application from the outside of the client terminal 100 and storing the application into the client terminal 100.

The application obtaining means 130 in the client terminal 100 obtains, according to instructions provided by a control means 120, a package containing an application via the wired and wireless network from the application storing area 111 or a package containing an application from the outside memory 105 and stores the obtained packages into the application storing area 111 (see Step A1 in Fig. 2). Next, the domain information obtaining means 140 obtains domain information from domain information data attached to the obtained packages (Step A2 in Fig. 2). The domain information is information to identify a type of a distributor of an application. Thus, the client terminal 100, when obtaining an application, acquires packaged one or more applications at one time. One piece of information is contained in one package. The domain information contained in one package is used as domain information of each application contained in the package.

Next, the verification means 150 obtains a digital signature or digital certificate attached to the application (Step A3 in Fig. 2) and then verifies the digital signature or digital certificate (Step A4 in Fig. 2). By this verification, it is confirmed that the package containing the application and domain information attached thereto are not tampered during communication.

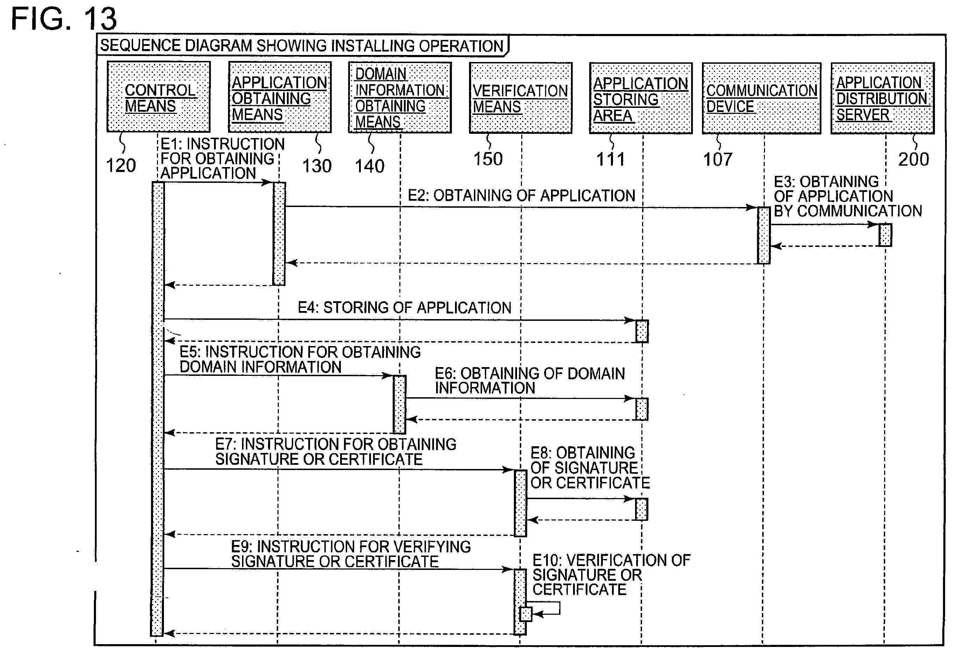

The above processing is described by referring to the sequence diagram in Fig. 13. First, the control means 120 provides an instruction for obtaining an application to the application obtaining means 130 (see Step E1 in Fig. 13). When an application is obtained from the outside of the terminal by communication, a package is obtained by using a communication device 107 (Step E2 in Fig. 13) from the application distribution server 200 (Step E3 in Fig. 13). Next, the control means 120 stores the package containing the obtained application into the application storing area 111 (Step E4 in Fig. 13). The application storing area 111 is an area secured in any one of the RAM 102, HDD 104, and external memory 105. Next, the control means 120 provides an instruction for obtaining domain information to the domain information obtaining means 140 (Step E5 in Fig. 13) and the domain information obtaining means 140 obtains domain information attached to the package of the application stored in the application storing area 111 (Step E6 in Fig. 13). Moreover, the control means 120 instructs the verification means 150 (Step E7 in Fig. 13) to obtain a digital signature or digital certificate attached to the package of an application stored in the application storing area 111 and further instructs the verification means 150 (Step E9 in Fig. 13) to perform processing of verifying the digital signature or digital certificate (Step E10 in Fig. 13).

Next, operations of executing the application downloaded from the outside of the client terminal 100 in the client terminal 100 are described below.

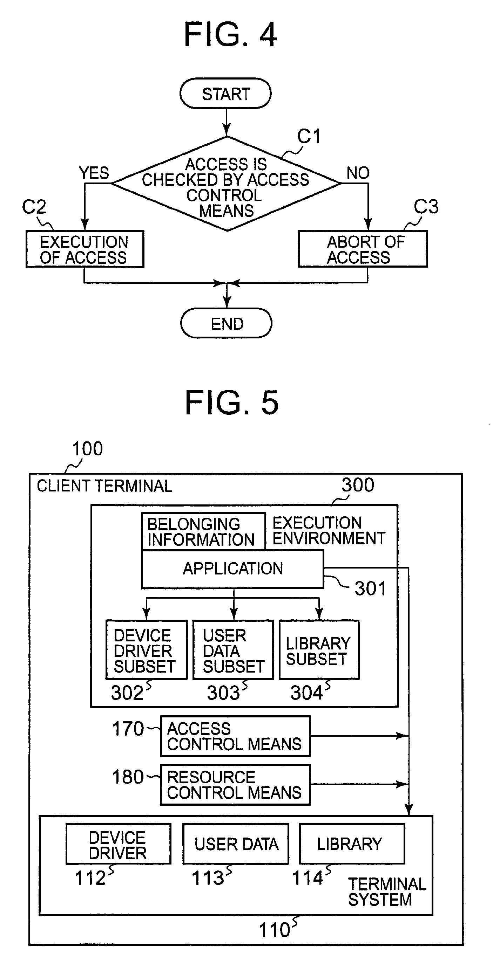

First, the control means 120 in the client terminal 100, by using the execution environment creating section 190, creates an execution environment to make an application run therein (Step B1 in Fig. 3). Figure 5 shows a diagram of the configurations in the execution environment.

The execution environment 300 is an environment in which access to the outside of the execution environment is limited, for example, to functions of the terminal system 110, device driver 112, user data 113, and library 114 existing outside of the execution environment. Therefore, by executing the application 301 in the execution environment 300, the functions of the terminal system and/or data can be protected from the application 301.

Moreover, the execution environment creating means 190 arranges part or all of each of the device driver 112, user data 113, and library 114 in the execution environment 300 (Step B2 in Fig. 3) in a manner in which access can be made from the application 301 in the execution environment 300. The device driver subset 302 shows that part or all of each of the device drivers out of a plurality of device drivers contained in the device driver 112 is located within the execution environment 300. The user data subset 302 shows that part or all of each of the user data out of a plurality of user data contained in the user data 112 is located within the execution environment 300. Similarly, the library subset 304 shows that part or all of each of the libraries out of a plurality of libraries contained in the library 114 is located within the execution environment 300.

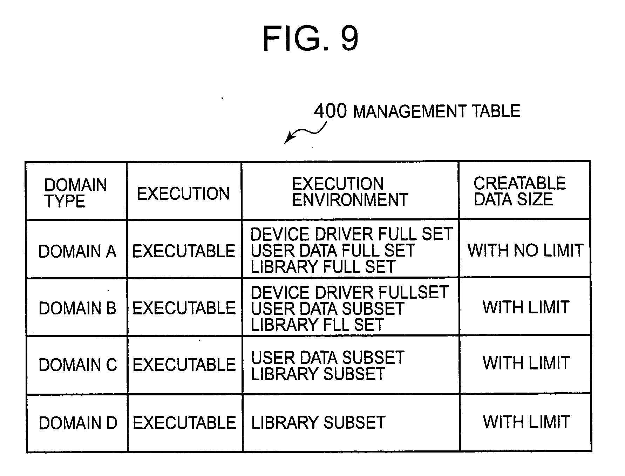

The execution environment creating means 190 determines which portion of each of the device driver 112, user data 113, and library 114 is to be arranged in the execution environment 300 based on the domain information attached to the package of the application 301 and a pre-set management table. Figure 9 shows one example of the management table 400. The management table 400 is managed by the execution environment creating means 190 and is located in any one of the RAM 102, ROM 103, HDD 104, and external memory 105, preferably in a storage device being used exclusively for reading so as not to be rewritten maliciously. In the management table 400, information about the propriety of execution of an application, execution environment, creatable data size for every domain type of the application is described.

The management table 400 shown in Fig. 9 is created in a manner in which all the applications can be classified into any one of domain A, domain B, domain C, and domain D. In this management table 400, the application belonging to any one of the domains can be also executed.

For the application belonging to the domain A, the device driver full set, user data full set, and library full set are installed within the execution environment 300 so that the device driver 112, user data 113, and library 114 can be accessed from the inside of the execution environment 300 and are set so that no limitation is imposed on a total size of creatable data.

For the application belonging to the domain B, the device driver full set, library full set, and user data sub set are arranged in the execution environment 300 so that an entire of each of the device driver 112 and library 114 and only part of the user data 113 can be accessed from the inside of the execution environment 300 and are set so that a limitation is imposed on a total size of creatable data.

For the application belonging to the domain C, the device driver 112 is set not to be accessed from the inside of the execution environment 300 and, therefore, the user data sub set and library sub set are arranged in the execution environment 300 so that the user data 113 and library 114 can be partially accessed from the inside of the execution environment 300 and are set so that a limitation is imposed on a total size of creatable data.

Also, for the application belonging to the domain D, the device driver 112 and the user data 113 are set not to be accessed from the inside of the execution environment 300 and, therefore, the library sub set is located in the execution environment 300 so that the library 114 is partially accessed from the inside of the execution environment 300 and are set so that a limitation is imposed on a total size of creatable data. This setting corresponds to the case in which only the library required for operations of the minimum application can be referenced to.

Thus, the execution environment is so created that an upper limit of a total size of a plurality of data (file) to be produced by the application is limited by the creatable data size in the management table 400 shown in Fig. 9.

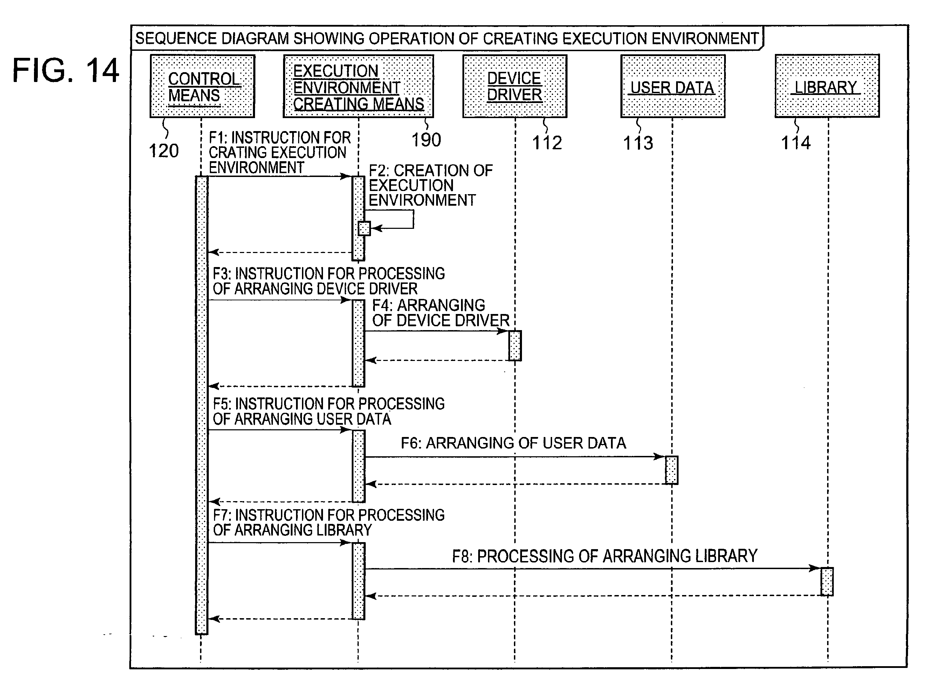

The above processing is described by referring to the sequence diagram in Fig. 14. When the control means 120 provides an instruction for creating an execution environment to the execution environment creating means 190 (Step F1 in Fig. 14), the execution environment creating means 190 creates an execution environment 300 in which an application is executed on the client terminal 100 (Step F2 in Fig. 14). The execution environment 300 is created in any one of the RAM 102, HDD 104, and external memory 105. Next, the control means 120 instructs the execution environment creating means 190 to sequentially perform device driver arranging processing, user data arranging processing, and library arranging processing (Steps F3, F5, and F7 in Fig. 14). In response to these instructions, the execution environment creating means 190 arranges only portion being stipulated as the portion that can be referred to by a domain of an object application out of the device driver 112, user data 113, and library 114 in the execution environment 300 so that the reference thereto can be made from the object application (Steps F4, F6, and F8 in Fig. 14). Thus, as shown in Fig. 5, the execution environment 300 is created in which the subset of each of the device driver 112, user data 113, and library 114 is arranged.

Moreover, the execution environment may be created by the execution environment creating means 190 immediately after the downloading of the application or immediately before the execution of the application.

After creation of the execution environment 300, the execution control means 160 lets the application 301 be executed in the execution environment 300. Operations of the application 301 performed while the application 301 is being executed in the execution environment 300 are described below.

The application 301 in the execution environment 300 is allowed to freely access a set (full set or subset) of each of the device driver 112, user data 113, and library 114 arranged in the execution environment 300. On the other hand, when access is made to the outside of the execution environment 300, for example, when access is made to functions of the terminal system 110, the access is checked by the access control means 180 (Step C1 in Fig. 4) and, if the access is allowed, the access is made possible (Step C2 in Fig. 4) and, if the access is not allowed, the access is made impossible (Step C3 in Fig. 4). Whether or not the access is allowed is judged and determined according to domain information attached to the application 301. Moreover, an amount of use of resources in the client terminal 100 such as the CPU 101, RAM 102, HDD 104, output device 106, communication device 106, input device 108, or a like to be used when the application 301 is executed is limited by the resource control means 180. The maximum amount of use is determined according to domain information attached to the application 301.

Next, effects of the first embodiment are explained.

In the first embodiment, the application obtained from the outside is executed in the isolated execution environment 300 in which direct access to data and/or function of the client terminal 100 is not allowed and, therefore, data or functions of the client terminal 100 can be protected from malicious access and the application introduced or obtained from the outside can be executed on the client terminal 100.

Moreover, in the first embodiment, according to domain information attached to a package of an application introduced and obtained from the outside, part or all of each of the user data 113, device driver 112, or library 114 of the client terminal 100 is arranged in the above isolated execution environment 300 and, therefore, ranges of data and functions that the application introduced or obtained from the outside is allowed to utilize can be set according to the domain of the application. Then, when access to the device driver 112, user data 113, and library 114 arranged in the execution environment 300 is made by the application, such a check process as performed on the access to data and functions existing outside of the execution environment 300 as in the Step C in Fig. 4 is not required, which enables high-speed access and a decrease in overhead incurring in the client terminal 100 owing to omission of the checking process.

Also, in the first embodiment, an upper limit of a total size of data (file) that an application can produce can be set in every execution environment 300 corresponding to domain information. This can impose limitation on a malicious application which continues to create a data file limitlessly or an application which commits wrong processes due to its bugs, thereby suppressing damage of intriguing with an area to be used by other application.

### Second embodiment

The second embodiment of the present invention is described in detail by referring to drawings.

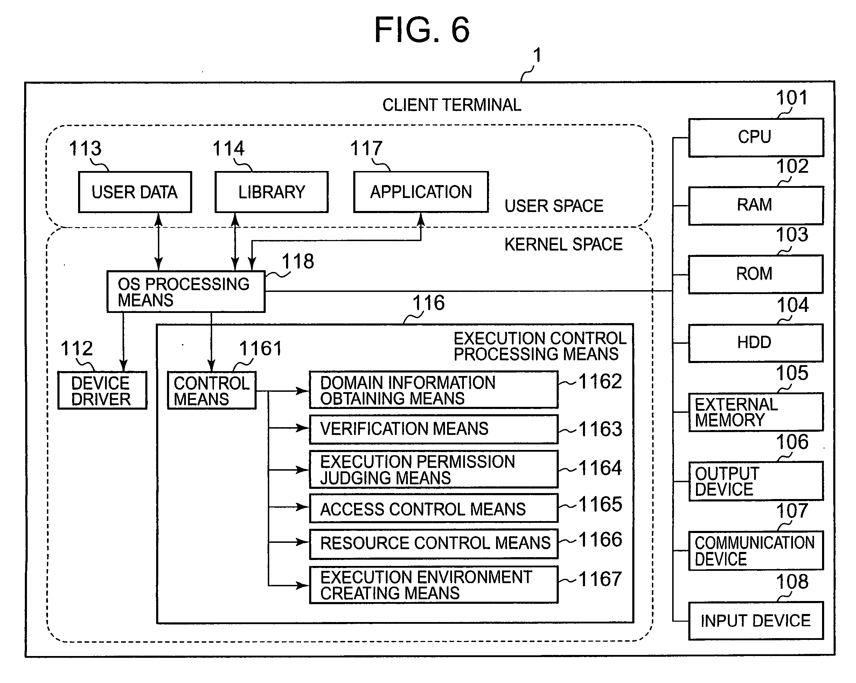

As shown in Fig. 6, the second embodiment of the present invention is made up of a client terminal 1.

The client terminal 1 includes a CPU 101, a RAM 103, a HDD 104, an external memory 105, an output device 106, a communication device 107, an input device 108, a user data 113, a library (library program) 114, an application 117, an OS (Operating System) processing means 118, a device driver 112, and an execution control processing means 116.

The execution control processing means 116 includes a control means 1161, a domain information obtaining means 1162, a verification means 1163, an execution permission judging means 1164, an access control means 1165, a resource control means 1166, and an execution environment creating means 1167.

The user data 113, library 114, and application 117 operate in user space of the client terminal 1. Moreover, the OS processing means 118, device driver 112, and execution control processing means 116 operate in kernel space of the client terminal 1. That is, each of the means 1161 to 1167 contained in the execution control processing means 116 is configured to function as part of the OS system. Each of the means 1161 to 1167 of the second embodiment differs from each of the means 120 to 190 of the first embodiment which is located in the user space. Another difference is that, in the second embodiment, domain information, and digital signature or digital certificate are attached to every application, while, in the first embodiment, domain information, and digital signature or digital certificate are attached in a unit of a package.

Each of these means and devices described above operates approximately as follows.

The CPU 101 is a central processing unit which controls each of the means and/or execution of a program and performs a computation process.

The RAM 102 is a random access memory which is a readable and writable storage device. The RAM 102 serves as a temporary storage area when data being used at a time of operations of each of the means and execution of programs is read or written. In some cases, it temporarily stores an execution code itself.

The ROM 103 is a read-only memory which is a readable-only storage device. Operation states of each of the means, execution codes of programs, data, or a like are stored therein. Even when the client terminal 1 is turned off, the stored execution code and data are not erased.

The HDD 104 is a hard disk drive which is a readable and writable storage device. Its reading and writing processing speed is lower than that of the RAM 102, however, its capacity is large and, even when the client terminal 1 is turned off, the stored execution codes and data are not erased.

The external memory 105 is a readable and writable storage memory which is detachable to the client terminal 1. Execution codes or data on an application, library 114, user data 113, device driver 112, or a like are saved in the external memory 105. By attaching the external memory 105 to the client terminal 1, execution codes or data can be added to the client terminal 1.

The output device 106 displays results from processing performed by the client terminal 1 on a display device and outputs voices.

The communication device 107 captures execution codes or data on an application, library 114, user data 113, device driver 112, or a like into the client terminal 1 by carrying out communication with the outside.

The input device 108 captures information into the client terminal 100 by manipulating keys (buttons) or by using voices to make a request for performing new processing.

The OS processing means 118 performs processing under the control of the OS including a system call made by the application 117. Also, the OS processing means 118 calls the control means 1161 while the system call processing is being performed.

The control means 1161 controls each of the means 1162 to 1167, creates an environment in which the application 117 and library 114 are executed, and controls the execution.

The domain information obtaining means 1162 obtains domain information associated with the library 114 and application 117.

The verification means 1163 performs processing of verifying a digital signature and/or digital certificate attached to the application 117.

The execution permission judging means 1164 executes the application 117 and library 114 and exerts various controls in an execution environment created by the execution environment creating means 1167.

The access control means 1165 controls access of the application 117 to resources in the client terminal 1.

The resource control means 1166 limits an amount of use of resources including the RAM 102, HDD 104, CPU 101, or a like to be used by the application 117 and library 114, based on domain information of the application 117.

The execution environment creating means 1167 creates an isolated execution environment in which the application 117 is allowed to be executed in the client terminal 1. At this time point, according to domain information attached to the application 117, part of each of the device driver 112, user data 113, and library 114 in the client terminal 1 can be referred to from the inside of the execution environment. The execution environment creating means 1167, as in the case of the first embodiment, installs a management table 400 for creating the execution environment as shown in Fig. 9, in any one of the RAM 102, ROM 103, HDD 104, and external memory 105 for management. The execution environment is so created that an upper limit of a total size of a plurality of data (file) to be produced by the application is limited by the creatable data size in the management table 400 shown in Fig. 9.

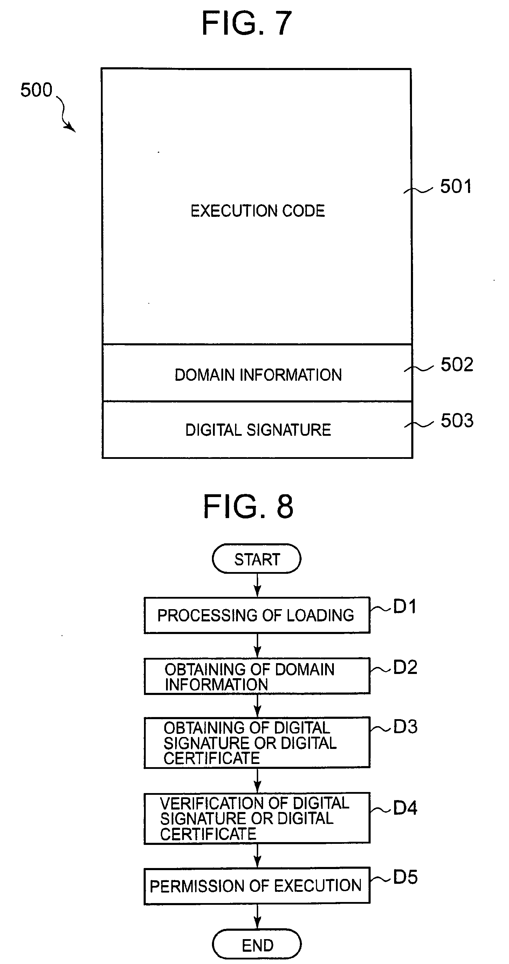

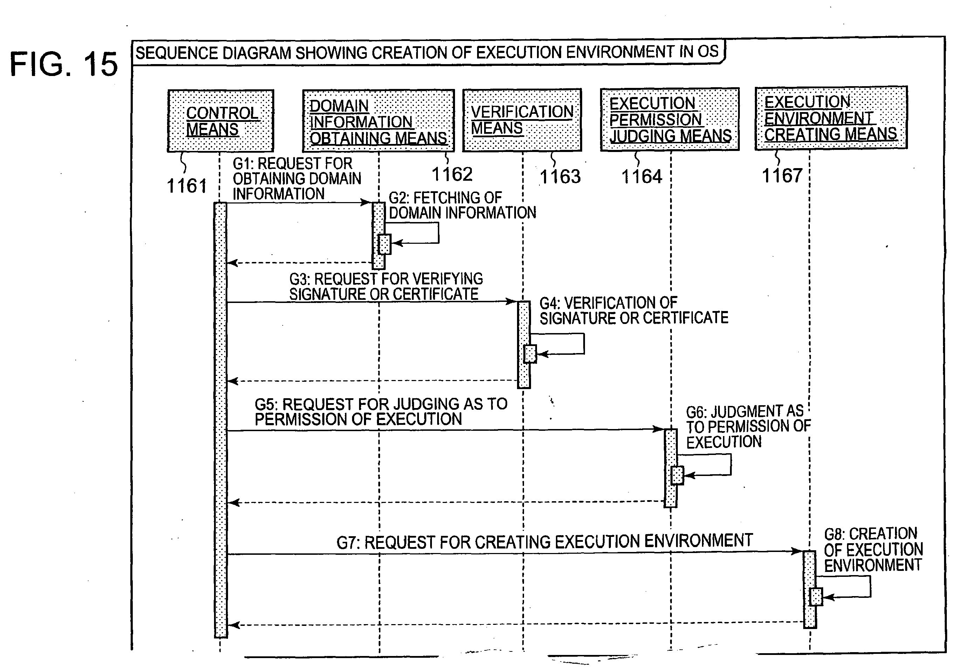

Next, operations of entire configurations of the second embodiment are described by referring to the flow charts in Figs. 8, 3, and 4 and a sequence diagram in Fig. 15.

First, the client terminal 1 obtains the application 117 from the outside and stores it to the client terminal 1. The client terminal 1, when obtaining the application 117 from the outside, may use any path. The client terminal 1 may use the communication device 107 to receive the application 117 or may obtain the application 117 by connecting the outside memory 105 in which the application is saved to the client terminal 1. Moreover, unlike the application obtaining means 130 shown in Fig. 1 in the first embodiment, special means is not required to obtain the application 117. That is, one application 117 may obtain another application 117 from the outside of the client terminal 1. Not only the application but also the library 114 and user data 113 can be obtained from the outside. The obtained application 117 may be stored in any storage device of the RAM 101, HDD 104, and external memory 105. In the second embodiment, to the obtained application are attached the domain information and the digital signature or digital certificate.

Next, operations performed when the application is activated is described by referring to Fig. 8.

When the application 117 starts, the application 117 is loaded in the storage device such as the RAM 102 together with its domain information, digital signature or digital certificate (Step D1 in Fig. 8).

The OS processing means 118 calls the control means 1161 with this timing. The control means 1161 calls the domain information obtaining means 1162 to obtain domain information showing an origin of the application 117 (Step D2 in Fig. 8). The domain information obtaining means 1162 fetches the domain information attached to the application 117. The domain information is information used to identify a kind of a distributor of the application. If domain information is not attached to the application 117, the application 117 is judged and handled as one distributed by a distributor belonging to an untrusted domain.

Next, the verification means 1163 obtains the digital signature or digital certificate attached to the application 117 (Step D3 in Fig. 8). Then, the verification means 1163 verifies the obtained digital signature or digital certificate (Step D4 in Fig. 8). The key used for this verification is located in an anti-tamper region included in the RAM 102, ROM 103, HDD 104, external memory 105, or CPU 101 and in an anti-tamper region included in the client terminal 1. By this verification, it can be confirmed that the application 117 and the domain information attached thereto are not tampered. If a digital signature or digital certificate is not attached thereto or, even if the digital signature or digital certificate is attached thereto, when a failure occurs in the verification, it is judged that there is a doubt that the application has been tampered and, as a result, an error is returned.

Moreover, in the first embodiment, the domain information and digital signature or digital certificate are attached in a unit of a package containing a plurality of applications, however, in the second embodiment, are attached for every application 117. Figure 7 shows a configuration of a file for the application to which these pieces of information have been embedded. The file 500 in Fig. 7 includes an execution code 501 making up an application, which becomes a code that can be executed on the client terminal 1, domain information 502 becoming a domain to which the execution code 501 making up the application belongs, and a digital signature 503 which becomes the information in which signature is provided to the execution code 501 and the main information 502. In Fig. 7, the file 500 to which the digital signature 503 is attached is shown as an example, however, the file can be used to which a digital certificate is attached instead of the digital signature 503.

Next, the execution permission judging means 1164 determines whether or not the execution of the application 117 is permitted based on a type of a domain shown by domain information attached to the application 117 and on the management table 400 in Fig. 9 (Step D5 in Fig. 8). If the execution is not permitted, an error is returned.

The above processing is described by referring to the sequence diagram in Fig. 15. The control means 1161, when the application 117 is loaded therein, calls the domain information obtaining means 1162 to obtain domain information showing an origin of the application 117 (G1 in Fig. 15). The domain information obtaining means 1162 fetches the domain information attached to the application 117 (G2 in Fig. 15). Further, the control means 1161 instructs the verification means 1161 to obtain a digital signature or digital certificate from the application 117 (Step G3 in Fig. 15) and to verify its signature or its certificate (Step G4 in Fig. 15). Then, the control means 1161 makes a request of the execution permission judging means 1164 to judge whether or not the application is allowed to be executed (G5 in Fig. 15).

Next, the creation of the environment in which the application 117 is executed is described by referring to Figs. 3 and 15.

After the permission of execution of the application 117 is provided by the execution permission judging means 1164, the control means 1161 calls the execution environment creating means 1167 (G7 in Fig. 15) and creates the execution environment in which the application is made to be executed (Step B1 in Fig. 3 and Step G8 in Fig. 15). In the execution environment, access to devices located in the outside of the execution environment, for example, to the device driver 112, user data 113, and library 114 is limited. Therefore, by executing the application 117 in the execution environment, functions of the client terminal 1 or data can be protected from the application. In this environment, a region producible for every domain, where the execution of the application is allowed, shown in the management table 400 in Fig. 9 is secured.

Moreover, the execution environment creating means 1167 creates an execution environment and arranges part or all of each of the device driver 112, user data 113, and library 114 in the execution environment (Step B2) so that the part is accessible from the application 117 in the execution environment. The application 117 is executed in this execution environment. What portion of the device driver 112, user data 113, and library 114 is referred is determined based on the domain information attached to the application and the management table shown in Fig. 9.

After the creation of the execution environment, tasks are returned from the control means 1161 and OS processing means 118 and the application 117 is normally activated for the execution.

Next, a method for the access control means 1165 limiting access from the application 117 to the specified device driver, user data or library while the application is being executed.

The application 117, while being executed, is allowed to be freely accessible to each set of the device driver 112, user data 113, and library 114 arranged in the execution environment created by the execution environment creating means 1167. On the other hand, the access of the application 117 is limited by the access control means 1165 to each set of the device driver 112, user data 113, and library 114 being not disposed in the execution environment.

For example, it is assumed that the application 117 calls the OS processing means 118 so as to access the controlling device driver of the communication device 107 serving as the device driver. The OS processing means 118 calls the access control means 1165 to check whether or not the access is permitted. The access control means 1165 judges, based on the location of the original file serving as the application 117, whether the application is the application having originally existed in the client terminal 1 or a new application obtained from the outside. If the application is one existed originally, the access is permitted and is otherwise not permitted. The result from this processing is returned as a return value to the control means 1161 and OS processing means 118. Here, if the access is permitted, the OS processing means 118 accesses to the controlling device driver of the communication device 107 in response to a call from the application 117. On the other hand, if the access is not permitted, an error is returned.

An amount of use of resources in the client terminal 1 including the CPU 101, memories, HDD 104, network, or a like used when the application 117 is executed is limited by the resource control means 1166. The maximum amount of use of the resources is determined by the resource control means 1166 depending on whether the application 117 is obtained from the outside of the client terminal 1 or not, in the same way as employed when the access to resources is determined.

According to the second embodiment, the execution control on the application 117 is described, however, by attaching the domain information and digital signature or digital certificate also to the library, the same execution control as on the application is made possible.

Next, effects of the second embodiment are described.

According to the second embodiment, the same effects as obtained in the first embodiment can be achieved and, additionally, the following effects can be also realized.

According to the second embodiment, the verification is made possible when the application is tampered on the client terminal 1 by someone. The reason for this is that, as shown in Fig. 7, the domain information 502 and digital signature 503 or digital certificate are attached in every execution file containing the execution code 501 making up the application and further that, every time the execution file 500 is started as the application, checking for tampering is made by using the domain information 502 and digital signature 503 or digital certificate (Steps D1 to D5 in Fig. 8). In the first embodiment, the checking for tampering is made only once using the domain information and digital signature or digital certificate when the package containing a plurality of applications is developed and, therefore, the processing is simplified, however, on the contrary, other tampering from that time forward is not checked and, as a result, strict management for the application developed from the package is further required.

Also, according to the second embodiment, if someone is trying to obtain an application from the outside, the client terminal 1 can install the application from the outside with safety by using all the possible methods. The reason for this is that, as shown in Fig. 7, the domain information and digital signature 503 or digital certificate are attached for every execution file 500 containing the execution code 501 making up the application and, every time the execution file 500 is activated as the application, the checking for tampering by using the domain information 502 and digital signature or digital certificate is made (Steps D1 to D5 in Fig. 8). In the first embodiment, when a package containing a plurality of applications is developed, checking for tampering by using the domain information and digital signature or digital certificate is made only once and, therefore, if the application on the client terminal 1 considered as safe comes into communication with an outside server other than supposed to receive a malicious application and then to store the application into the storage device on the client terminal 1, no checking for the malicious application is made, which allows the malicious application to be executed without being checked. As a result, in the first embodiment, control is required so as to permit the application to communicate with only an trusted server or so as to permit the execution of only the application which is assured to have been stored by developing the package.

Also, according to the second embodiment, one application can activate another application with safety without being conscious of security. The reason for this is that the domain information obtaining means 1162, verification means 1163, execution permission judging means 1164, and execution environment creating means 1167 exist as part of OS functions and all these means can be called, without fail, from the OS processing means 118 (system call) being always called at a time of activation of the application and the execution environment which matches a distributor and/or an origin of an application to be activated is created. In the first embodiment, each of the means operate in user space and, therefore, one special application, if having the domain information obtaining means 140, verification means 150, execution control means 160, and execution environment creating means 190, cannot activate another application by creating an execution environment that matches the origin of another application. That is, in the first embodiment, one application other than the special application having the above means cannot activate another application with safety.

### Third Embodiment

Next, the third embodiment of the present invention is described by referring to drawings.

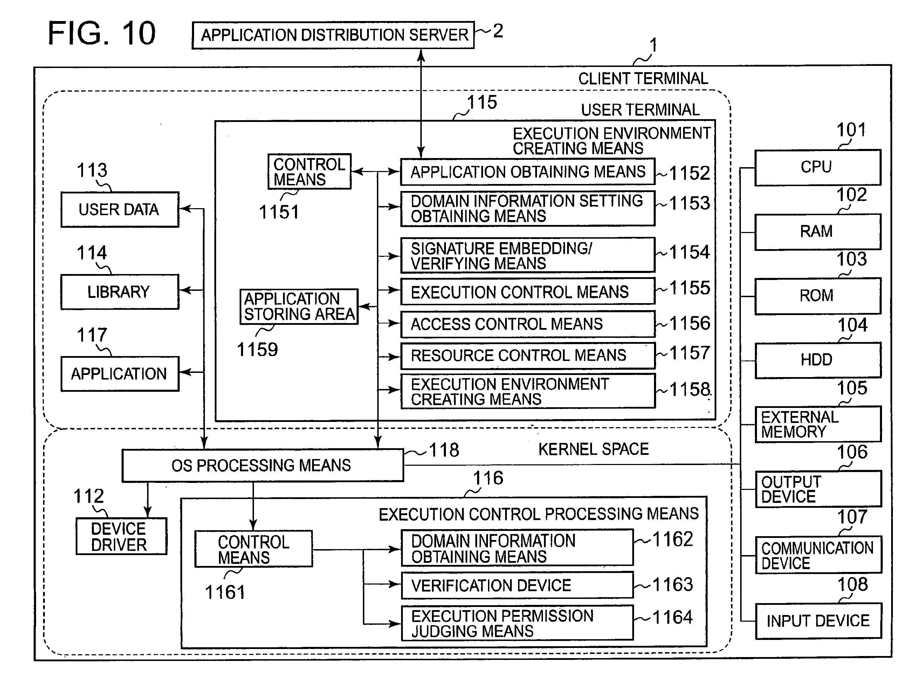

Configurations of the third embodiment of the present invention are shown in Fig. 10. Configurations of the third embodiment differ from the configuration of the second embodiment shown in Fig. 6 in that the access control means 1165, resource control means 1166, and execution environment creating means 1167 existing in the kernel space of the client terminal 1 are removed and the application distribution server 2 is connected to the client terminal 1 and the execution environment creating means 115 is disposed additionally in user space of the client terminal 1.

The execution environment creating means 115 includes a control means 1151, an application obtaining means 1152, a domain information setting/obtaining means 1153, a signature embedding/verifying means 1154, an execution control means 1155, an access control means 1156, a resource control means 1157, an execution environment creating means 1158, and an application storing area 1159.

Functions of the application distribution server 2, control means 1151, application obtaining means 1152, execution control means 1155, access control means 1156, resource control means 1157, and execution environment creating means 1158 of the third embodiment are, respectively, the same as those of the application distribution server 200, control means 120, application obtaining means 130, execution control means 160, access control means 170, resource control means 180, and execution environment creating means 190 shown in the configuration diagram of the first embodiment in Fig. 1 and their operations are almost the same in both the first and second embodiments.

The domain information setting / obtaining means 1153 has not only the function of fetching domain information from the package of the application, which is the function of the domain information obtaining means 140 shown in the configuration diagram in Fig. 1 of the first embodiment, but also a function of embedding the domain information into the application fetched by developing the package. Also, the signature embedding / verifying means 1154 has not only the function of verifying the digital signature attached to a package of an application or verifying a digital certificate, which is the function of the verification means 150 shown in the configuration diagram in Fig. 1 of the first embodiment, but also a function of newly attaching the digital signature or digital certificate to the application fetched by developing the package.

Components other than described above out of components of the third embodiment are the same as those in the second embodiment and their operations are almost the same.

Descriptions of the third embodiment, centering on the main points of difference between the first and second embodiments, are made.

The application obtained by the application obtaining means 1152 from the application distribution server 2 or the external memory 105 may be an application package obtained by packaging a plurality of applications or one application.

When the application package is obtained, one domain information and digital signature or digital certificate are attached to the package. Moreover, as in the case of the second embodiment, as shown in Fig. 7, domain information and digital signature or digital certificate may be or may not be attached to one application contained in the application package. According to the third embodiment, if domain information and digital signature or digital certificate are not attached to each of files contained in the application package obtained by the client terminal 1, after the development of the application package, the domain information and digital signature or digital certificate are attached to each of the files. That is, the domain information contained in the application package is fetched by the domain information setting / obtaining means 1153 and the fetched same domain information is attached to the application 117 having been contained in the package. Thereafter, the digital signature or digital certificate is attached by the signature embedding / verifying means 1154 to the application 117

When an application is obtained, one piece of domain information and a digital signature or digital certificate are attached to the obtained application.

Operations from obtaining to execution of the application 117 of the third embodiment are almost the same as those in the first embodiment. The operation of the third embodiment differs from that of the first embodiment in that, at a time of execution of the application, a signature of the application is further verified. That is, by attaching the digital signature to the application package and application, checking for tampering is made at a time of obtaining the application package and another checking for tampering is performed again at a time of executing the application.

As in the first embodiment, during the time period from obtaining to execution of the application 117, an execution environment is created by the execution environment creating means 1158. Thereafter, the application 117 is executed in the created execution environment.

At a time of activating the application 117, it is confirmed by the execution control processing means 116 that the domain information and digital signature or digital certificate are correct.

Moreover, in Fig. 10, the access control means 1156, resource control means 1157 and execution environment creating means 1158 are contained in the execution environment creating means 115 disposed in the user space, however, some of these means may be contained in the execution control processing means 116 disposed in the kernel space, not in the execution environment creating means 115.

Furthermore, in Fig. 10, the domain information setting / obtaining means 1153 and signature embedding / verification means 1154 are contained in the execution environment creating means 115 disposed in the user space, however, these means may be contained in the execution control processing means 116 disposed in the kernel space, not in the execution environment creating means 115. In this case, the domain information setting /obtaining means 1153 and signature embedding / verifying means 1154 are contained in the domain information obtaining means 1162 and verification means 1163. Then, after the development of the application package, processing of embedding domain information in each of files contained in the package or of attaching a digital signature or digital certificate to each of the files can be achieved by the control means 1151 contained in the execution environment creating means 115 disposed in the user space which calls the domain information obtaining means 1162 and verification means 1163 from the control means 1161 contained in the execution control processing means 116 disposed in the kernel space via the OS processing means 118.

Next, effects of the third embodiment are described.

According to the third embodiment, the same effects as obtained in the first embodiment can be achieved and, additionally, the following effects can be also realized.

According to the third embodiment, domain information fed to a package containing an application is provided to the application and a digital signature or digital certificate is newly provided to the application having the domain information and, when the application is activated, the digital signature or digital certificate attached to the application is verified and, therefore, when compared with the first embodiment in which a digital signature or digital certificate attached to a package provided with domain information is verified only when a program is installed, a program can be executed in a safer manner.

### Fourth Embodiment

Next, the fourth embodiment of the present invention is described by referring to drawings.

In the first to third embodiments, in order to reduce overhead incurring when an application is executed (started), processing of creating an execution environment is performed before the execution of the application. In the fourth embodiment, after the activation of an application, the execution of the application is suspended immediately to create the execution environment of the application and the execution of the application is resumed in the created execution environment.

In the fourth embodiment, as in the case of the third embodiment, the configurations shown in Fig. 10 are employed and the orders of calling the execution control processing means 116 and the execution environment creating means 1158 in the third embodiment are reversed in the fourth embodiment. Here, the application 117 may be obtained by the application obtaining means 1152 or by other methods. That is, any method may be used to obtain the application 117. It is not necessary that the application 117 is stored in the application storing area 1159. All that is required is that domain information and digital signature or digital certificate is attached to the application 117.

Immediately after the application 117 is activated by the execution control means 1155 or other means, the domain information obtaining means 1162 and verification means 1163 are called, via the OS processing means 118, from the control means 1161 contained in the execution control processing means 116 disposed in the kernel space. By performing these processes, the domain information of the application 117 can be obtained and the verification of the digital signature or digital certificate is completed, thereby ensuring perfection of the application 117.

When the domain information is obtained by the execution control processing means 116, processing is once continued by means disposed in user space. The control means 1151 disposed in the user space and the execution environment creating means 1158 are called via the OS processing means 118. At this time point, the domain information is passed thereto. Then, an execution environment corresponding to domain information is created by the execution environment creating means 1158. Thereafter, the application 117 is normally activated and its execution is continued.

As a result, only processing of obtaining domain information and of verifying a digital signature or digital certificate is performed in the kernel and remaining processing is thereafter performed in the user space.

Moreover, the domain information obtaining means 1162 may be removed from the kernel space and the domain information setting / obtaining means 1153 disposed in the user space may obtain the domain information. In this case, in the kernel space, only the verification of the digital signature or digital certificate attached to the application 117 is performed.

In each of the above embodiments, a domain of a program is determined based on domain information attached to the application package or program, however, in the fourth embodiment, the method of determining the domain of the program is not limited to the domain determining method employed in the above embodiment and may be determined by other methods. One example of the available methods includes a method in which a domain of a program is determined, when the digital signature or digital certificate is attached to the application package or program, based on results from the verification of the digital signature or digital certificate. More specifically, by performing the verification of the digital certificate or digital signature attached to the application, using, in turn, a root certificate showing a success of the verification or an open key attached in advance to each domain, domain corresponding to the root certificate or public key and domain corresponding to the case in which the verification does not succeed even using any root certificate or public key are used as the domain of the program.

Next, configurations and operations of the embodiments are described by referring to examples in detail.

### Example 1

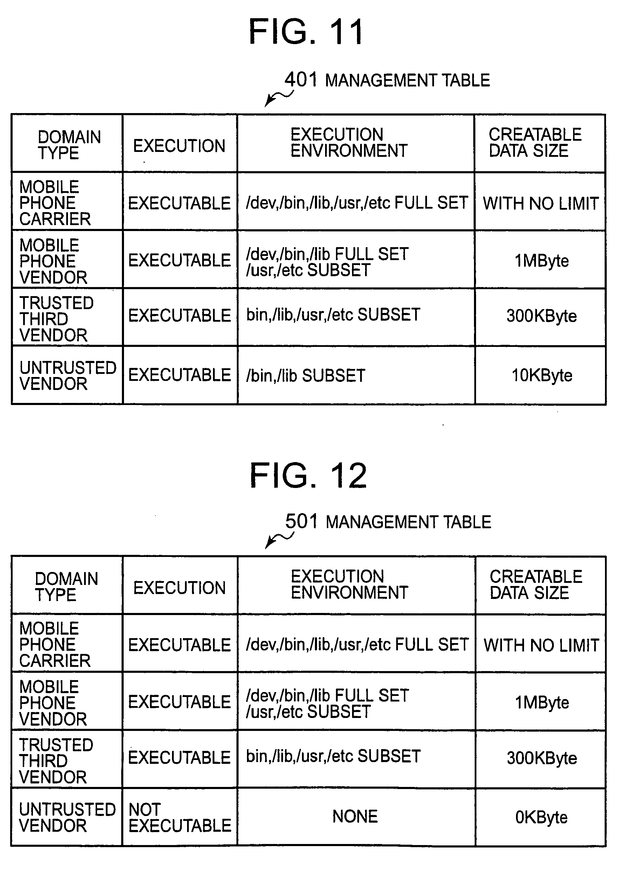

First, the example 1 configured based on the above first embodiment is explained by using the configuration diagram of Fig. 1. Moreover, as a concrete example of the management table 400 showing the method of creating an execution environment for every domain, a management table 401 in Fig. 11 is used. In the example 1, an execution environment is created based on contents shown in Fig. 11.

In the example 1, a flow of processing performed when an application is introduced on the client terminal 100 from the outside is as follows.

It is assumed that, as shown in Fig. 1, the application to be fed from the outside exists on the application distribution server 200 or in the external memory 105. As the external memory 105, a removable memory card such as an SD (Secure Digital) card, Compact Flash® is envisioned.

A form of the application to be handled here includes a single file, a plurality of file groups, for example, file groups each being made up of an execution file and various set files and data required for the execution of the application, and a plurality of file groups packaged by using general data archive software (for example, zip, tar formats).

Also, an external application of the example 1 includes an information file having a description of domain information of the application. It is assumed in the example 1 that the application is distributed in a form of an application package obtained by packaging a plurality of file groups as one file and its domain information file is contained in one application package.

The domain information contains information used to classify the belonging of the application and, according to this belonging, the execution environment to be created is controlled and the range of access and resource control and degree of limitation are changed. As a name of the belonging, for example, a corporation name to which a creator of the application belongs can be used. Also, when the client terminal 100 is a mobile phone, a name of an organization such as a mobile phone carrier, mobile phone vendor, trusted third vendor, untrusted vendor, or a like can be used for the classification to create the execution environment. Also, as an example of information file containing domain information that can be used, a general digital certificate is envisioned. As a form of the digital certificate, for example, an X.509 format is widely used. By using the digital certificate, the domain information described there is handled as the domain information assured by a trusted authentication authority.

A general digital signature can be attached to the external application to be handled in the example 1 for transmission. By attaching the digital signature, tampering of an application file being distributed on a network can be detected. The form of the digital signature obtained by encrypting, by using a secret key held by an application distributor, Hash data of an application package file created by a Hash algorithm such as a SHA-1 (Secure Hash Algorithm) is widely employed. The secret key held by the application distributor corresponds to an open key contained in the certificate attached to the application and by using the open key contained in the certificate, the encrypted signature data can decrypted.

It is assumed in the example 1 that one digital certificate or one digital signature is attached to an application package. The control means 120 of the client terminal 100 installs an application in the client terminal 100 by obtaining the external application of this form, attached domain information, digital certificate, digital signature file, or a like from the application distribution server 200 connected by a wired or wireless network or from the external memory 105 using the application obtaining means 130 and by storing them into the application storing area 111 inside of the client terminal 100 (Step A1 in Fig. 2). The stored application package is developed and stored as a file making up the application. Moreover, domain information is associated with each file.

Thereafter, by using the domain information obtaining means 140, domain information is obtained from a domain information file (Step A2 in Fig. 2). Next, by using the verification means 150, the digital certificate or digital signature attached to the application is obtained (Step A3 in Fig. 2) and, then, the application is verified (Step A4 in Fig. 2). The verification confirms that the domain information attached to the application is right and the application file is not tampered.

Thus, the processing of installing an application in the terminal from the outside of the client terminal 100 is terminated.

Next, the execution of the application obtained from the outside on the client terminal 100 is described.

The control means 120, before executing the application obtained from the outside and stored in the application storing area 111, first creates an execution environment of an application by using the execution environment creating means 190 (Step B1 in Fig. 3). The execution environment of the application created here is an isolated environment separated from various resources and functions such as memory space, disk, library, disk driver, or a like to be protected in the client terminal 100 and the application to be executed in the execution environment is not allowed to freely access these resources and functions. This can prevent the application obtained from the outside from accessing spuriously data and/or functions in the client terminal 100 and from interfering with operations of other applications.

Also, in the execution environment, an independent file system, which is different from a file system on the client terminal 100, is prepared and assigned therein and the file system is created in sizes being allowed according to a domain. As an example of the method for realizing such an independent execution environment and file system includes a method of creating another different application execution environment or another file system on the OS system or system file of the client terminal 100. This is technology in which, as an application on the OS (called as a "host OS") of the client terminal 100, another OS (called as a "guest OS") is made to operate and an external application is made to run on the guest OS, and technology called Java VM® or UML (Use Module Linux, that is, technology to operate another Linux OS on one Linux OS) is one example. An example of the method of creating another file system includes a method of limiting a directory that can be referred to from an external application only to part or all the file system by using a chroot command employed in the UNIX® or a like. Another example includes the method of making a processor A to operate a basic system of the client terminal 100 and its OS and another processor B to operate another OS in a multi-processor environment having a plurality of processors. In this case, the environment on the OS running by the processor B is regarded as an independent execution environment being different from the environment in which the base system is operated and the external application is operated in the independent environment.

By assigning a creatable data size value for every domain being set to the management table 401 in Fig. 11, in the mobile phone carrier, data (file) is made to be produced using the file system existing on the client terminal 100 serving as a base without creating another independent file system. In the mobile phone vendor, trusted third vendor, and untrusted vendor, file systems are created which provide areas in which data of 1 Mbyte, 300 Kbyte, and 10 Kbyte in size can be produced respectively.

Moreover, the execution environment creating means 190 arranges part or all of each of the device driver 112, user data 113, and library 114 in the application execution environment created as above according to domain information of the application (Step B2 in Fig. 3).

It is also assumed in the example 1 that each of the device driver 112, user data 113, and library 114 is made up of a plurality directories in the terminal system 110 of the client terminal 100. Taking the user data 113 as an example, each piece of data is stored, according to every data kind, in each telephone directory data, mail address data, image data, or a like. Therefore, the processing of arranging part of the user data means that part of these directories is arranged.

As shown in Fig. 5 representing the execution environment after the arrangement, by arranging the device driver subset 302, user data subset 303, and library subset 304 in the execution environment 300 of the application, the application 301 running in the execution environment 300 can refer to and utilize the device driver, user data, and library within the operational ranges arranged herein.

What operational range of each of the device driver 112, user data 113, and library 114 is to be arranged in the execution environment is determined according to the domain information associated with the application and the management table 401 shown in Fig. 1. When the domain information, for example, is classified into four information types including the information about a mobile phone carrier, mobile phone vendor, trusted third vendor, and untrusted vendor, the processing of arranging all operational ranges of each of the device driver 112, user data 113, and library 114 for the mobile phone carrier and mobile phone vendor and of arranging none of their operational ranges for the untrusted vendor and of arranging part of their operational range for the trusted third vendor is performed. This can be realized by preparing a directory in which the device driver full set, user data full set, and library full set are located on the file system serving as a base in a manner to be referred to. By creating /dev,/bin,/lib,/usr,/etc or a like as a directory in the execution environment so that the created /dev,/bin,/lib,/usr,/etc or the like as the directory can be referred to by the device driver full set or subset, user data full set or subset, library full set or subset according to the domain information, it is made possible to arrange the device driver, user data, and library according to a domain in the execution environment. Moreover, in some cases, a full set or subset of each of the device driver, user data, and library can be arranged in a copied form in the execution environment.

After creating the execution environment, the control means 120 executes the application 301 in the execution environment 300 using the execution control means 160. When the application 301 is executed on Linux or a like, the application 301 is executed as a process. The identifier to uniquely identify the process is associated with domain information associated with an application.

The application 301 running in the execution environment 300 is freely accessible to the device driver, user data, and library disposed in the execution environment 300 however, its access to various functions (for example, displaying function, communicating function, or a like) of the terminal system 110 disposed outside of the execution environment 300 and to the device driver 112, user data 113, and the library 114 in the terminal system 110 is limited by the access control means 170.

One example of a concrete method of the access control means 170 limiting access includes one method in which a check function is embedded in an API provided in the terminal system to make the access and, when each API is called, the check function makes an inquiry at the access control means 170 about accessibility and, only when the access is allowed, an API call is made.

The range of the access limitation imposed by the access control means 170 can be changed according to domain information associated with the application 301. In this case, the associated domain information is obtained from the process identifier to be utilized. For example, the mobile phone carrier and mobile phone vendor are allowed to access all functions and data, an untrusted vendor is not allowed to access all functions and data, and an trusted vendor is allowed to access part of the functions and data.

Also, an amount of hardware and software resources in the client terminal 100 and terminal system 110 to be used by the application 301 is limited by the resource limiting means 180. The resources in the client terminal 100 and terminal system 110 include the CPU 101, RAM 102, HDD 104, communication device 107, and windows to display terminal screen.

### Example 2

Next, the example 2 based on the second embodiment is described by referring to the configuration diagram in Fig. 6. Also, as a specified example of the management table 400 showing a method of creating an exertion environment for every domain, the management table 401 shown in Fig. 11 is employed. In the example 2, an execution environment is created based on contents shown in Fig. 11. The OS to be installed on the client terminal 1 is Linux.

In the example 2, when the application 117 is captured from the outside of the client terminal 1 to the client terminal 1, the following processing is performed.

First, the client terminal 1 obtains the application 117 from the outside to store the obtained application 117 into the client terminal 1. The client terminal 1 may use any path and/or any method to obtain the application 117 from the outside. To obtain the application 117, the client terminal 1 may receive the application 117 from an external server by using the communication device 107 or may connect the external memory 105 storing the application 117 to the client terminal 1. Any special means to obtain the application 117 such as the application obtaining means 130 as shown in the first embodiment is not required. That is, an application may obtain other application 117 from the outside of the client terminal 1. Not only the application 117 but also the library 114 and user data 113 can be obtained from the outside. The obtained application 117 may be stored in any storage device such as the RAM 102, HDD 104, external memory 105, or a like.

Next, operations performed when the application 117 is activated are described by referring to Fig. 8.

When the application 117 is activated, contents of an execution file making up the application 117 are loaded by the OS processing means 118 in a storage area such as the RAM 102. In this case, "execsystem" call is made in Linux. At this time point, the OS processing means 118 is called (Step D1 in Fig. 8).

The OS processing means 118 calls the control means 1161 immediately after the OS processing means 118 is called. The control means 1161 calls the domain information obtaining means 1162 in order to obtain the domain information showing an origin of the application 117. The domain information obtaining means 1162 fetches the domain information attached to the application 117. If the domain information is attached, the application 117 is judged as being distributed by an untrusted vendor and the application 117 is handled as belonging to an untrusted vendor as a domain.

The domain information denotes information used to identify a type of a distributor of the application 117 and, in the case of the management table 401 in Fig. 11, the domain information denotes information such as a type as a mobile phone carrier, mobile phone vendor, trusted third vendor, or untrusted vendor. Information about a name of an author (name of cooperation) may be added. In the domain information, a clear text made up of character strings or encrypted clear text is added to an end of an execution file.

Moreover, a general digital signature can be attached. By attaching the digital signature, while the application is being distributed on a network, it is made possible to detect tampering of the execution file making up the application 117 even after the application 117 is stored in the client terminal 1. Data obtained by encrypting, using a secret key held by an application distributor, Hash data of the application 117 obtained by using one-way Hash algorithm such as SHA-1 is widely used as digital signature data.

The use of a general digital certificate describing the domain information is envisioned. For example, the X. 509 format is widely used. By using the digital certificate, the domain information described therein is handled as being secured by a trusted authentication authority. Moreover, a digital signature may be attached to the certificate. The secret key held by the application distributor corresponds to a public key contained in the certificate attached to the application and, by using the public key contained in the certificate, encrypted signature data can be decrypted.

Next, the verification means 1163 verifies the digital signature or digital certificate attached to the application 117. The verification can confirm that the application 117 has not been tampered. When the digital signature or digital certificate is not attached, or when there is a doubt of being tampered, that is, when a failure occurs in the verification, an error is returned (Step D3 in Fig. 8). The public key being used for the verification of a signature and corresponding to the secret key held by a distributor may be held, in advance, by the verification means 1163 and, when a certificate is used, a public key is contained in the certificate and the public key may be used. Moreover, when the verification means 1163 holds, in advance, a public key, there are two methods, one holding one public key being common to all domains and another holding the public key for every domain. For example, there are four domains, four public keys are to be held. When a plurality of public keys is held, it is necessary to specify a public key corresponding to the domain information contained in the application 117 and to check whether or not tampering has occurred.

Moreover, in the example 1, the domain information and digital signature or digital certificate are attached in units of packages containing a plurality of applications, however, in the example 2, the domain information and the digital signature or digital certificate are attached in every application 117. Configurations of a file making up the application 117 and embedding the information are shown in Fig. 7. In Fig. 7, the file 500 to which not the digital certificate but the digital signature 503 is attached is shown.

After having determined to which domain the application belongs, the execution permission judging means 1164 judges whether or not the application 117 is allowed to be executed. The execution permission means 1164 determines whether or not the application 117 is allowed to be executed according to the domain information attached to the application 117. If the execution is not permitted, an error is returned (Step D4 in Fig. 8).

Whether or not the execution is allowed is judged by referring to the management table 401 shown in Fig. 11. According to the management table 401, if the domain information fetched from the application 117 is a mobile terminal vendor, the execution of the application 117 or the client terminal is permitted. Moreover, the management table 401 as shown in Fig. 11 is possibly changed depending on use of the client terminal 1.

Next, the creation of an environment to execute the application 117 is described.

The application 117, after receiving an execution permission from the execution environment creating means 1164, creates an execution environment in which the application 117 is to be executed by using the execution environment creating means 1167.

Also, in this execution environment, an independent file system being different from the file system on the client terminal 1 is provided and assigned so as to be created in sizes being allowed according to a domain. Examples of methods for realizing such the independent execution environment and/or file system as described above include the method in which, as described in the example 1, the specified original application execution environment and/or file system are created on the OS of the client terminal 1 and on the file system and the method in which, in a multiprocessor environment, the OS and/or file system to be exclusively used for external applications on another processor being different from the processor on which the basic system and OS on the client terminal 1 operate.

Based on a value of a data base creatable for every domain in Fig. 11, data file can be produced limitlessly on the mobile phone carrier by using the file system, as it is, on the client terminal 100 serving as a base, without creating a different file system. A file system having an area in which data of 1 Mbyte, 300 Kbyte, and 10 Kbyte in size can be created is created respectively on the mobile phone vendor, trusted third vendor, and untrusted vendor.

This execution environment is an environment in which access to the outside of the execution environment, for example, to the domain driver 112, user data 113, and library 114 is limited. Therefore, by executing the application 117 in the execution environment, functions of the client terminal 1 and/or data can be protected from the application.

The execution environment created here is an environment which is isolated and separated from various resources including the device driver 112, user data 113, and library 114 of the client terminal 1 and from their functions, and the application 117 to be executed in this environment is not allowed to freely access to their resources and functions. This prevents the application 117 obtained from the outside from spuriously accessing data and/or functions in the client terminal 1 and/or functions in the client terminal 1 and/or from interfering with operations of other application 117. In a system using Linux, at a time of creating the execution environment, it is known that "mkdir" and "chroot" commands in user space are used. In the example 2, functions equivalent to these commands can be operated by the execution environment creating means 1167 in kernel space.

Moreover, the execution environment creating means 1167 arranges part or all of each of the device driver 112, user data 113, and library 114 in the execution environment so that the part can be accessed from the application in the execution environment. Which portion of each of the device driver 112, user data 113, and library 114 is located is determined according to the domain information attached to the application 117 and the management table 401 in Fig. 11 (Step B2).

In the example 2, each of the device driver 112, user data 113, library 114 or a like is made up of a plurality of directions in the client terminal 1. Taking the user data 113 as an example, each of the telephone directory data, mail address data, image data, or a like is stored in a different directory according to a type of data. Therefore, the processing of disposing part of the user data denotes that part of these directories is disposed in the execution environment so as to be referred to. In the example 2, this disposition of the functions is performed in the kernel space by the execution environment creating means 1167.

These functions are disposed in the execution environment and, therefore, the application 117 running in the execution environment can refer to and utilize each of the resources within the range of being disposed in the execution environment. What operational range of each of the device driver 112, user data 113, and library 114 is to be placed in the execution environment is determined by the domain information attached to the application 117 and by the management table 401 in Fig. 11.

As shown in Fig. 5 showing the execution environment after the creation, the device driver subset 302, user data subset 303, and library subset 304 are arranged in the execution environment 300 and, as a result, the application 301 operating in the execution environment 300 is allowed to refer to and utilize the device driver 112, user data 113, and library 114 within the range being disposed in the execution environment.

What operational range of each of the device driver 112, user data 113, and library 114 is to be arranged in the execution environment is determined according to the domain information associated with the application and the management table 401 shown in Fig. 1. For example, when the domain information is classified into four information types including the information about a mobile phone carrier, mobile phone vendor, trusted third vendor, and untrusted vendor, the processing of arranging all operational ranges of each of the device driver 112, user data 113, and library 114 for the mobile phone carrier and mobile phone vendor and of arranging none of their operational ranges for the untrusted vendor and of arranging part of their operational range for the trusted third vendor is performed. This can be realized by preparing a directory in which the device driver full set, user data full set, and library full set are located on the file system serving as a base in a manner to be referred to. By creating /dev,/bin,/lib,/usr,/etc or a like as a directory in the execution environment so that the created /dev,/bin,/lib,/usr,/etc or the like as the directory can be referred to by the device driver full set or subset, user data full set or subset, library full set or subset according to the domain information, it is made possible to arrange the device driver, user data, and library according to a domain in the execution environment. Moreover, in some cases, a full set or subset of each of the device driver, user data, and library can be arranged in a copied form in the execution environment.

After the creation of the execution environment, the routine is returned from the control means 118 and the application 117 is normally activated to start its application.

Next, the method to be performed by the access control means 1165 of controlling access from the application 117 to various resources during the execution of the application is described. The access control means 1165 operates when the application 117 actually accesses resources. The control of access resources such as the device driver, user data, and library has been exercised by the execution environment creating means 1167, however, by using the access control means 1165, the access can be controlled further in a detailed manner.

During the execution of the application 117, free access is allowed to the device driver 112, user data 113, and library 114 arranged in the execution environment created by the execution environment creating means 1167. If access from any one of the device driver 112, user data 113, and library 114 to the application 117 obtained from the outside of the client terminal is not desired, access to any one of them can be limited by the access control means 1165.

For example, the application 117, when trying to access the controlling device driver of the communication device 107 serving as the device driver 112, calls the OS processing means 118. The OS processing means 118 calls the access control means 1165 to check whether or not the access is allowed. In order to access the device driver 112 from the application, in Linux, a system call such as "open", "close", "read", "write", or a like is invoked. At this time point, the OS processing means 118 is called. The access control means 1165 judges, based on a place where an original file making up the application 117 is located, whether the application originally exists in the client terminal 1 or the application 117 is obtained from the outside. If the application originally exists, the access is permitted and otherwise the access is not permitted. The result is returned, as a return value, to the control means 1161 and OS processing means 112. Here, if the access is allowable, the OS processing means 118 accesses the controlling device driver of the communication device 107 and otherwise an error is returned.

That is, setting is done in advance by the access control means 1165 so that the application originally existing in the client terminal 1 is allowed to access a resource and the application obtained from the outside of the client terminal 1 is not allowed to access the resource. As a method of realizing the above, in the case of Linux, the use of SELinux is known. When Linux is employed as an OS in the client terminal 1, the above method can be easily achieved, by doing setting so that access to a resource being an object of access setting is prohibited by default in the SELinux policy file at a time of creation of the system and so that the access of only the application 117 already existing in the client terminal 1 is permitted.

Moreover, an amount of use of resources in the client terminal 100 such as the CPU 101, memory, HDD 104, and the network to be used when the application 117 is executed is limited by the resource control means 180. The maximum amount of use of the resources is determined depending on whether or not the application 117 is obtained from the outside of the client terminal 1 as in the case where access is allowed to resources depending on whether or not the application 117 is obtained from the outside of the client terminal 1.

### Example 3

Next, the example 3 is described. In the example 3, as a table showing the creation of execution environment for every domain, contents shown in the management table 501 in Fig. 12 are used. In the examples 1 and 2, the table 401 in Fig. 11 is used. The contents of the processing are the same as those in the examples 1 and 2 and the contents of the table in Fig. 11 are different from those in Fig. 12. That is, in Fig. 11, the application belonging to the untrusted vendor is executable and its execution environment is /bin,/lib subset and a size of creatable data (file) is 10 Kbyte in size. In Fig. 12, the application belonging to the untrusted vendor is not executable and execution environment and data (file) are not creatable. Thus, by rewriting contents of the management table, the method of creating the execution environment for every domain is changed. In the example 3, there is a merit that, by rewriting contents of the table shown in Figs. 11 and 12, the method of creating the execution environment can be flexibly changed.

### INDUSTRIAL APPLICABILITY

The present invention is applicable to an execution control device to download an application from the outside in a client terminal for safe execution and to an execution control program to make a computer achieve a download of an external application and an execution controlling device.

## Claims

1. A program execution control method for controlling execution of a program on a computer comprising:
a step of arranging at least part of each of a device driver, library, and user data provided in said computer so that the part is referred to from a program running in an execution environment in which access to an outside of the execution environment is limited and of executing said program in said execution environment.

2. A program execution control method for controlling execution of a program on a computer comprising:
a step of arranging a device driver, library, and user data in a range being determined based on a domain of said program out of a device driver, library, and user data provided in said computer so that said device driver, library, and user data is referred to from a program running in an execution environment in which access to an outside of the execution environment is limited to execute said program in said execution environment.

3. The program execution control method according to Claim 2, wherein a domain of said program is determined based on domain information associated with said program.

4. The program execution control method according to Claim 2, wherein a domain of said program is determined based on a result from verification of a digital certificate or digital signature associated with said program.

5. The program execution control method according to Claim 2, wherein, when a range of each of said device driver, library, and user data to be arranged in said execution environment is determined, a table in which said range is set for every main type is referred to.

6. The program execution control method according to Claim 3, wherein domain information provided in a package containing said program is obtained to use the information as domain information associated with said program.

7. The program execution control method according to Claim 6, wherein the obtained domain information is provided in said program.

8. The program execution control method according to Claim 3, wherein domain information provided in said program is obtained to use the information as domain information associated with said program.

9. The program execution control method according to Claim 3, wherein at least one of domain information provided in said program and domain information provided in a package containing said program is obtained to use the information as domain information associated with said program.

10. The program execution control method according to any one of Claims 6 to 9, wherein a digital certificate or digital signature attached to said package having said domain information or a program having said domain information is verified.

11. The program execution control method according to any one of Claims 7 to 9, wherein a digital signature is provided in said program having said domain information and the provided digital signature is verified for every program execution.

12. The program execution control method according to Claim 1 or Claim 2, wherein an execution environment of said program is created before activation of said program.

13. The program execution control method according to Claim 1 or Claim 2, wherein the execution of said program is suspended immediately after activation of said program and an execution environment of said program is created and the execution of said program is resumed in the created execution environment.

14. The program execution control method according to Claim 1 or Claim 2, wherein accessibility to functions in a computer from a program running in said execution environment is controlled according to domain information associated with said program.

15. The program execution control method according to Claim 1 or Claim 2, wherein a size of data or a file in which a program running in said execution environment is able to be produced is controlled according to domain information associated with said program.

16. The program execution control method according to Claim 1 or Claim 2, wherein an amount of use of resources in a computer by the program running in said execution environment is limited according to domain information associated with said program.

17. A program execution control device for controlling execution of a program on a computer comprising:
an execution environment creating unit to arrange at least part of each of a device driver, library, and user data provided in said computer so that the part is referred to from a program running in an execution environment in which access to an outside of the execution environment is limited; and
an execution controlling unit to execute said program in said execution environment.

18. A program execution control device for controlling execution of a program on a computer comprising;
an execution environment creating unit to arrange a device driver, library, and user data in a range being determined based on a domain of said program out of a device driver, library, and user data provided in said computer so that the device, driver, and user data are referred to from a program running in an execution environment in which access to an outside of the execution environment is limited; and
an execution control unit to execute said program in said execution environment.

19. The program execution control device according to Claim 18, wherein said execution environment creating unit determines a domain of said program based on domain information associated with said program.

20. The program execution control device according to Claim 18, wherein said execution environment creating unit determines a domain of said program based on a result from verification of a digital certificate or digital signature associated with said program.

21. The program execution control device according to Claim 18, wherein said execution environment creating unit, when determining a range of each of said device driver, library, and user data to be arranged in said execution environment, refers to a table in which said range is set for every main type.

22. The program execution control device according to Claim 19, further comprising a domain information obtaining unit to obtain domain information provided in a package containing said program to use the information as domain information associated with said program.

23. The program execution control device according to Claim 22, wherein said domain information obtaining unit provides the obtained domain information to said program.

24. The program execution control device according to Claim 19, further comprising a domain information obtaining unit to obtain domain information provided in said program to use the information as domain information associated with said program.

25. The program execution control device according to Claim 19, further comprising a domain information obtaining unit to obtain at least one of domain information provided in said program and domain information provided in a package containing said program to use the information as domain information associated with said program.

26. The program execution control device according to any one of Claim 22 to 25, further comprising a verification unit to verify a digital certificate or digital signature attached to said package having said domain information or a program having said domain information.

27. The program execution control device according to any one of Claim 23 to 25, further comprising a verification unit to provide a digital signature in said program having said domain information and to verify the provided digital signature for every program execution.

28. The program execution control device according to Claim 17 or Claim 18, wherein said execution environment creating unit creates an execution environment of said program before activation of said program.

29. The program execution control device according to Claim 17 or Claim 18, wherein said execution controlling unit suspends the execution of said program immediately after activation of said program and creates an execution environment of said program and resumes the execution of said program in the created execution environment.

30. The program execution control device according to Claim 17 or Claim 18, wherein accessibility to functions in a computer from a program running in said execution environment is controlled according to domain information associated with said program.

31. The program execution control device according to Claim 17 or Claim 18, wherein said execution environment creating unit creates an execution environment where a size of data or a file in which a program running in said execution environment is able to be produced is controlled according to domain information associated with said program.

32. The program execution control device according to Claim 17 or Claim 18, further comprising a resource control unit to limit an amount of use of resources in a computer by the program running in said execution environment according to domain information associated with said program.

33. An execution control program to make a computer function as an execution environment creating unit to arrange at least part of each of a device driver, library, and user data so that the part is referred to from a program running in an execution environment in which access to an outside of the execution environment is limited and as an execution control unit to execute said program in said execution environment.

34. An execution control program to make a computer function as an execution environment creating unit to arrange a device driver, library, and user data in a range being determined based on a domain of said program out of a device driver, library, and user data provided in said computer so that the device driver, library, and user data are referred to from a program running in an execution environment in which access to an outside of the execution environment is limited and as an execution control unit to execute said program in said execution environment.

35. The execution control program according to Claim 34, wherein said execution environment creating unit determines a domain of said program based on domain information associated with said program.

36. The execution control program according to Claim 34, wherein said execution environment creating unit determines a domain of said program based on a result from verification of a digital certificate or digital signature associated with said program.

37. The execution control program according to Claim 34, wherein said execution environment creating unit, when determining a range of each of said device driver, library, and user data to be arranged in said execution environment, refers to a table in which said range is set for every domain type.

38. The execution control program according to Claim 35, wherein said computer is made to function as a domain information obtaining unit to obtain domain information provided in a package containing said program to use the information as domain information associated with said program.

39. The execution control program according to Claim 38, wherein said domain information obtaining unit provides the obtained domain information to said program.

40. The execution control program according to Claim 35, wherein said computer is made to function as a domain information obtaining unit to obtain domain information provided in said program to use the information as domain information associated with said program.

41. The execution control program according to Claim 35, wherein said computer is made to function as a domain information obtaining unit to obtain at least one of domain information provided in said program and domain information provided in a package containing said program to use the information as domain information associated with said program.

42. The execution control program according to any one of Claim 38 to 41, wherein said computer is made to function as a verification unit to verify a digital certificate or digital signature attached to said package having said domain information or a program having said domain information.

43. The execution control program according to any one of Claim 39 to 41, wherein said computer is made to function as a verification unit to provide a digital signature in said program having said domain information and to verify the provided digital signature for every program execution.

44. The execution control program according to any one of Claim 33 or Claim 34, wherein said execution environment creating unit creates an execution environment of said program before activation of said program.

45. The execution control program according to Claim 33 or Claim 34, wherein said execution controlling unit suspends the execution of said program immediately after activation of said program and creates an execution environment of said program and resumes the execution of said program in the created execution environment.

46. The execution control program according to Claim 33 or Claim 34, wherein said computer is made to function as an access controlling unit to control accessibility to functions in a computer from a program running in said execution environment according to domain information associated with said program.

47. The execution control program according to Claim 33 or Claim 34, wherein said execution environment creating unit to create an execution environment where a size of data or a file in which a program running in said execution environment is able to be produced is controlled according to domain information associated with said program.

48. The execution control program according to Claim 33 or Claim 34, wherein said computer is made to function as a resource control unit to limit an amount of use of resources in a computer by the program running in said execution environment according to domain information associated with said program.

## Amended claims

### Amended claims under Art. 19.1 PCT

**1.** (after amendment) A program execution control method for controlling execution of a program on a computer comprising:
a step of creating an execution environment so that at least part of each of a device driver, library, and user data provided in said computer is referred to from a program running in an execution environment in which access to an outside of said execution environment is limited and of executing said program in said execution environment.

**2.** (after amendment) A program execution control method for controlling execution of a program on a computer comprising:
a step of creating an execution environment so that a device driver, library, and user data in a range being determined based on a domain of said program out of the device driver, library, and user data provided in said computer are referred to from a program running in an execution environment in which access to an outside of the execution environment is limited.

**3.** (after amendment) The program execution control method according to Claim 2, wherein a domain of said program is determined based on information associated with said program.

**4.** (after amendment) The program execution control method according to Claim 2, wherein a referencible range is determined based on a domain of said program and on a result from verification of a digital certificate or digital signature associated with said program.

**5.** The program execution control method according to Claim 2, wherein, when a range of each of said device driver, library, user data arranged in said execution environment, a table in which said range is set for each domain type is referred to.

**6.** The program execution control method according to Claim 3, wherein domain information provided in a package containing said program is obtained to use the information as domain information associated with said program.

**7.** The program execution control method according to Claim 6, wherein the obtained domain information is provided in said program.

**8.** The program execution control method according to Claim 3, wherein domain information provided in said program is obtained to use the information as domain information associated with said program.

**9.** The program execution control method according to Claim 3, wherein at least one piece of domain information provided in said program and domain information provided in a package containing said program is obtained to use the information as domain information associated with said program.

**10.** The program execution control method according to any one of Claims 6 to 9, wherein a digital certificate or digital signature attached to said package having said domain information or a program having said domain information is verified.

**11.** The program execution control method according to any one of Claims 7 to 9, wherein a digital signature is provided in said program having said domain information and the provided digital signature is verified for each program execution.

**12.** The program execution control method according to Claim 1 or Claim 2, wherein an execution environment of said program is created before activation of said program.

**13.** (after amendment) The program execution control method according to Claim 1 or Claim 2, wherein the execution of said program is suspended after activation of said program and an execution environment of said program is created and the execution of said program is resumed in the created execution environment.

**14.** (after amendment) The program execution control method according to Claim 1 or Claim 2, wherein accessibility to computer functions existing outside said execution environment from a program running in said execution environment is controlled according to domain information associated with said program.

**15.** The program execution control method according to Claim 1 or Claim 2, wherein a size of data or file in which a program running in said execution environment is able to be produced is controlled according to domain information associated with said program.

**16.** The program execution control method according to Claim 1 or Claim 2, wherein an amount of use of resources in a computer by the program running in said execution environment is limited according to domain information associated with said program.

**17.** (after amendment) A program execution control device for controlling execution of a program on a computer comprising:
an execution environment creating unit to create an execution environment in which at least part of each of a device driver, library, and user data provided in said computer is referred to from a program running in an execution environment in which access to an outside of the execution environment is limited.

**18.** (after amendment) A program execution control device for controlling execution of a program on a computer comprising;
an execution environment creating unit to create an environment in which a device driver, library, and user data in a range being determined based on a domain of said program out of the device driver, library, and user data provided in said computer is referred to from a program running in an execution environment in which access to an outside of the execution environment is limited.

**19.** (after amendment) The program execution control device according to Claim 18, wherein said execution environment creating unit identifies a domain of said program based on information associated with said program.

**20.** (after amendment) The program execution control device according to Claim 18, wherein said execution environment creating unit determines a referencible range based on a domain of said program and on a result from verification of a digital certificate or digital signature associated with said program.

**21.** The program execution control device according to Claim 18, wherein said execution environment creating unit, when determining a range of each of said device driver, library, and user data to be arranged in said execution environment, refers to a table in which said range is set for every domain type.

**22.** The program execution control device according to Claim 19, further comprising a domain information obtaining unit to obtain domain information provided in a package containing said program to use the information as domain information associated with said program.

**23.** The program execution control device according to Claim 22, wherein said domain information obtaining unit provides the obtained domain information to said program.

**24.** The program execution control device according to Claim 19, further comprising a domain information obtaining unit to obtain domain information provided in said program to use the information as domain information associated with said program.

**25.** The program execution control device according to Claim 19, further comprising a domain information obtaining unit to obtain at least one piece of domain information provided in said program and domain information provided in a package containing said program to use the information as domain information associated with said program.

**26.** The program execution control device according to any one of Claims 22 to 25, further comprising a verification unit to verify a digital certificate or digital signature attached to said package having said domain information or a program having said domain information.

**27.** The program execution control device according to any one of Claims 23 to 25, further comprising a verification unit to provide a digital signature in said program having said domain information and to verify the provided digital signature for each program execution.

**28.** The program execution control device according to Claim 17 or Claim 18, wherein said execution environment creating unit creates an execution environment of said program before activation of said program.

**29.** (after amendment) The program execution control device according to Claim 17 or Claim 18, wherein said execution controlling unit suspends the execution of said program after activation of said program and creates an execution environment of said program and resumes the execution of said program in the created execution environment.

**30.** (after amendment) The program execution control device according to Claim 17 or Claim 18, wherein accessibility to computer functions existing outside the execution environment from a program running in said execution environment is controlled according to domain information associated with said program.

**31.** The program execution control device according to Claim 17 or Claim 18, wherein said execution environment creating unit creates an execution environment where a size of data or file in which a program running in said execution environment is able to be produced is controlled according to domain information associated with said program.

**32.** The program execution control device according to Claim 17 or Claim 18, further comprising a resource control unit to limit an amount of use of resources in a computer by the program running in said execution environment according to domain information associated with said program.

**33.** An execution control program to make a computer function as an execution environment creating unit to create an execution environment in which at least part of each of a device driver, library, and user data is referred to from a program running in an execution environment in which access to an outside of the execution environment is limited.

**34.** (after amendment) An execution control program to make a computer function as an execution environment creating unit to create an execution environment in which a device driver, library, and user data in a range being determined based on a domain of said program out of a device driver, library, and user data provided in said computer are referred to from a program running in an execution environment in which access to an outside of the execution environment is limited.

**35.** (after amendment) The execution control program according to Claim 34, wherein said execution environment creating unit determines a domain of said program based on information associated with said program.

**36.** (after amendment) The execution control program according to Claim 34, wherein said execution environment creating unit determines a referencible range based on a domain of said program and on a result from verification of a digital certificate or digital signature associated with said program.

**37.** The execution control program according to Claim 34, wherein said execution environment creating unit, when determining a range of each of said device driver, library, and user data to be arranged in said execution environment, refers to a table in which said range is set for each domain type.

**38.** The execution control program according to Claim 35, wherein said computer is made to function as a domain information obtaining unit to obtain domain information provided in a package containing said program to use the information as domain information associated with said program.

**39.** The execution control program according to Claim 38, wherein said domain information obtaining unit provides the obtained domain information to said program.

**40.** The execution control program according to Claim 35, wherein said computer is made to function as a domain information obtaining unit to obtain domain information provided in said program to use the information as domain information associated with said program.

**41.** The execution control program according to Claim 35, wherein said computer is made to function as a domain information obtaining unit to obtain at least one piece of domain information provided in said program and domain information provided in a package containing said program to use the information as domain information associated with said program.

**42.** The execution control program according to any one of Claims 38, 40 and 41, wherein said computer is made to function as a verification unit to verify a digital certificate or digital signature attached to said package having said domain information or a program having said domain information.

**43.** The execution control program according to any one of Claims 39, 40 and 41, wherein said computer is made to function as a verification unit to provide a digital signature in said program having said domain information and to verify the provided digital signature for each program execution.

**44.** The execution control program according to any one of Claim 33 or Claim 34, wherein said execution environment creating unit creates an execution environment of said program before activation of said program.

**45.** (after amendment) The execution control program according to Claim 33 or Claim 34, wherein said execution controlling unit suspends the execution of said program after activation of said program and creates an execution environment of said program and resumes the execution of said program in the created execution environment.

**46.** (after amendment) The execution control program according to Claim 33 or Claim 34, wherein said computer is made to function as an access controlling unit to control accessibility to computer functions existing outside the execution environment from a program running in said execution environment according to domain information associated with said program.

**47.** The execution control program according to Claim 33 or Claim 34, wherein said execution environment creating unit to create an execution environment where a size of data or file in which a program running in said execution environment is able to be produced is controlled according to domain information associated with said program.

**48.** The execution control program according to Claim 33 or Claim 34, wherein said computer is made to function as a resource control unit to limit an amount of use of resources in a computer by the program running in said execution environment according to domain information associated with said program.

**49.** (after addition) The program execution control method according to Claim 1 or Claim 2, further comprising a step of executing said program in said execution environment.

**50.** (after addition) The program execution control method according to Claim 17 or Claim 18, still further comprising an execution control unit to execute said program in said created execution environment.

**51.** (after addition) The program execution control method according to Claim 33 or Claim 34, wherein said computer is made to function as an execution control unit to execute said program in said execution environment, in addition to the execution control unit to create the execution environment in which at least part of each of said device driver, library, and user data is referred to from a program running in the execution environment in which access to the outside of the execution environment is limited.

**52.** (after addition) The program execution control method according to Claim 1 or Claim 2, wherein said execution environment is created in a copied form.

**53.** (after addition) The program execution control method according to Claim 17 or Claim 18, wherein at least part of each of said device driver, library, and user data is referred to by copying at least part of each of said device driver, library, and user data in said execution environment.

**54.** (after addition) The program execution control method according to Claim 33 or 34, wherein said execution environment is created by being copied.

Statement under Art. 19.1 PCT
The present invention has characteristic aspects described below which are not disclosed in any cited reference. That is, a security policy for each security domain is provided in a terminal and a security domain attached to software obtained from outside of the terminal is identified. For example, which security policy in the terminal is to be applied is judged according to information of a certificate or a like and, based on the judgment, an execution environment is created. Owing to the above characteristic aspects, a terminal maker can flexibly set a security policy while concentrating on protecting important system resources in a terminal without being conscious of a software creator and can create an execution environment according to the security policy. On the other hand, the software creator can create software without being conscious of differences in configurations among terminals.

It is clarified by Claims 1, 2, 3, 4, 13, 14, 17, 18, 19, 20, 29, 30, 33 to 36, 45 and 46 that the execution environment creating means creates an execution environment in which system resources existing outside of the execution environment is allowed to be referred to.

It is also clarified by added Claims 49 and 52, 50 and 53, 51 and 54 that the program execution controlling device stated in Claims 1 or 2, 17 or 18, and 33 or 34 is provided with the execution control means to execute a program in the created execution environment.
